# EUROPEAN PATENT APPLICATION

(11) **EP 4 661 436 A1**
(43) Date of publication of application: **10.12.2025**
(21) Application number: 24759749.5
(22) Date of filing: 23.02.2024
(51) Int. Cl.: H04W 4/02

(54) **SENSING COMMUNICATION METHOD AND APPARATUS**

(30) Priority: 23.02.2023 CN 202310206431
(71) Applicant: Huawei Technologies Co., Ltd., Shenzhen, Guangdong 518129 (CN)
(72) Inventor: QIAN, Bin, Shenzhen, Guangdong 518129 (CN); HUANG, Lei, Shenzhen, Guangdong 518129 (CN); LIU, Chenchen, Shenzhen, Guangdong 518129 (CN); PENG, Xiaohui, Shenzhen, Guangdong 518129 (CN); WU, Kuan, Shenzhen, Guangdong 518129 (CN); YANG, Xun, Shenzhen, Guangdong 518129 (CN)
(74) Representative: Isarpatent
(86) International application number: PCT/CN2024/078213
(87) International publication number: WO 2024/175075

(57) **Abstract**

A sensing communication method and an apparatus are provided, and may be applied to a WPAN system or a sensing (sensing) system that supports UWB, for example, a wireless local area network system that supports a 802.15.4a protocol, a 802.15.4z protocol, a 802.15.4ab protocol, or the like in 802.15 series protocols, or supports 802.11 series protocols such as a next-generation Wi-Fi protocol of the IEEE 802.11ax, for example, 802.11be, Wi-Fi 7, or EHT, and a next-generation protocol of the 802.11be like Wi-Fi 8, UHR, or Wi-Fi AI. The method includes: A sensing requester sends a sensing request, where a MAC payload of the sensing request includes sensing initiator address information; and a communication apparatus that receives the sensing request forwards the sensing request when determining that an address of the communication apparatus does not match the sensing initiator address information; or the communication apparatus that receives the sensing request parses the sensing request when determining that the address of the communication apparatus matches the sensing initiator address information.

## Description

This application claims priority to Chinese Patent Application No. 202310206431.2, filed with the China National Intellectual Property Administration on February 23, 2023 and entitled "SENSING COMMUNICATION METHOD AND APPARATUS", which is incorporated herein by reference in its entirety.

### TECHNICAL FIELD

This application relates to the field of communication technologies, and in particular, to a sensing communication method and an apparatus.

### BACKGROUND

An ultra wideband (ultra wideband, UWB) technology is a wireless carrier communication technology. For example, data may be transmitted through a nanosecond-level non-sinusoidal narrow pulse. Therefore, ultra wideband occupies a wide spectral range. Due to a narrow pulse and low radiation spectrum density, the UWB has advantages such as a strong multi-path resolution capability, low power consumption, and high confidentiality.

Sensing by using a UWB pulse is a key topic currently concerned. For example, in sensing application, information such as a distance, an angle, and a speed about a target may be extracted by detecting an echo of a sensing packet on the target.

Currently, definitions of a sensing measurement-related report and a sensing packet are clear, and a design of a sensing request or control information needs to be further improved.

### SUMMARY

Embodiments of this application provide a sensing communication method and an apparatus, to effectively improve a sensing request or control information in sensing application.

According to a first aspect, an embodiment of this application provides a sensing communication method. The method is applied to a communication apparatus. The method includes:
receiving a sensing request, where a medium access control (medium access control, MAC) payload (MAC payload) of the sensing request includes sensing initiator address information (sensing initiator address), and the sensing initiator address information indicates an address of a sensing initiator; determining whether an address of the communication apparatus matches the address of the sensing initiator; and when the address of the communication apparatus does not match the address of the sensing initiator, forwarding the sensing request based on the address of the sensing initiator; or when the address of the communication apparatus matches the address of the sensing initiator, parsing the sensing request.

In this embodiment of this application, the communication apparatus may be the sensing initiator, or may be a relay node. The relay node may be configured to forward information between a sensing requester and the sensing initiator. The communication apparatus may obtain the address of the sensing initiator based on a sensing initiator address field in the MAC payload in the sensing request, to determine whether the communication apparatus is the relay node in sensing by proxy, or determine whether the communication apparatus is the sensing initiator. Therefore, it can be effectively ensured that the sensing request can be sent to the sensing initiator, and smooth execution of a sensing procedure can be ensured.

In a possible implementation, a MAC header (MAC header) of the sensing request does not carry a destination address (destination address) field, or the MAC header of the sensing request carries the destination address field and an address indicated by the destination address field is a broadcast address.

When the destination address field carries the broadcast address, it may indicate that there are more than one receiver of a message carrying the destination address field, or there are a plurality of receivers of the message carrying the destination address field. Therefore, if the address indicated by the destination address field is the broadcast address, the communication apparatus cannot effectively identify to which the sensing request is sent. In this case, the MAC payload of the sensing request shown in this embodiment of this application carries the sensing initiator address information, so that the communication apparatus can effectively learn of the receiver of the sensing request.

In a possible implementation, the sensing request further includes at least one of the following information: information indicating whether the sensing initiator uses mono-static sensing (mono-static sensing); information about a number of sensing responders recommended in the sensing request; and information about an address of a sensing responder recommended in the sensing request.

In this embodiment of this application, the related information (for example, the number information and the address information) of the sensing responder are recommended in the sensing request, so that after receiving the sensing request, the sensing initiator can effectively learn of the sensing responder with which the sensing initiator needs to perform a sensing procedure, to obtain related information of the target. For example, the sensing responder recommended in the sensing request may be a sensing responder that is recommended based on prior information of a target and that is closer to the target.

In a possible implementation, the sensing request further includes any one of the following information: information indicating that a sensing response is to be transmitted via ultra wideband UWB, and information indicating that the sensing response is to be transmitted via out of band OOB (out of band, OOB).

In this embodiment of this application, when the sensing response is transmitted via the UWB, power consumption is low, confidentiality is high, and a transmission rate of the sensing response is high. When the sensing response is transmitted via OOB, a coverage range is large.

In a possible implementation, the sensing request further includes any one of the following information: information indicating that the sensing response and the sensing request are to be transmitted in a same beacon interval (beacon interval), and information indicating that the sensing response is to be transmitted in a beacon interval after a beacon interval in which the sensing request is located.

In a possible implementation, the sensing request further includes address type information, the address type information (address type) indicates a type of the address of the sensing initiator or a type of the address of the sensing responder recommended in the sensing request, and the type includes a short address or an extended address.

In a possible implementation, the method further includes:
when the address of the communication apparatus does not match the address of the sensing initiator, after forwarding the sensing request, receiving an acknowledgment ACK frame or a data frame for the sensing request from the sensing initiator; or when the address of the communication apparatus matches the address of the sensing initiator, sending an acknowledgment ACK frame or a data frame for the sensing request.

In a possible implementation, the ACK frame or the data frame is used to acknowledge the sensing request and acknowledge the sensing responder recommended in the sensing request; the ACK frame or the data frame is used to acknowledge the sensing request and reject the sensing responder recommended in the sensing request; or the ACK frame or the data frame is used to reject the sensing request.

In this embodiment of this application, the sensing initiator feeds back the ACK frame or the data frame, to notify the sensing requester that the sensing initiator receives the sensing request, and further notify the sensing requester whether the sensing initiator uses the sensing responder recommended in the sensing request to perform a sensing procedure. When the ACK frame or the data frame indicates rejecting the request, the sensing initiator may still notify the sensing requester that the sensing initiator receives the sensing request, but does not perform a subsequent sensing by proxy operation.

In a possible implementation, the method further includes: sending the sensing response from the sensing responder, where the sensing response includes sensing responder address information, and the sensing responder address information indicates the address of the sensing responder.

In a possible implementation, the sensing response further includes the address type information, and the address type information indicates a type of the address of the sensing responder.

In a possible implementation, when the address of the communication apparatus matches the address of the sensing initiator, the method further includes:
sending the control information, where the control information includes sensing control information, the sensing control information includes a sensing packet bitmap (sensing packet bitmap), and each bit in the sensing packet bitmap indicates a frame structure of a corresponding sensing packet, or each bit in the sensing packet bitmap indicates a frame structure of a sensing packet in a corresponding sensing slot.

In this embodiment of this application, a frame structure is configured for each sensing packet based on the control information, or the frame structure is configured for each sensing slot based on the control information. This effectively improves flexibility of configurations of sensing packets.

In a possible implementation, the sensing control information further includes sensing packet configuration information (sensing packet config.), and when a value of the sensing packet configuration information is a first value, it indicates that the frame structure of the sensing packet is a first frame structure or a second frame structure, or when the value of the sensing packet configuration information is a second value, it indicates that the frame structure of the sensing packet is the first frame structure or a third frame structure.

In this embodiment of this application, the sensing packet configuration information may indicate one or two of N frame structures defined in a protocol, where N is a positive integer. Based on the sensing packet configuration information or a sensing packet bitmap, a sensing responder can effectively learn of frame structures of sensing packets in all sensing slots of a sensing round. This improves flexibility of configurations of sensing packets, and ensures that two communication parties can agree on the configurations of the sensing packets in the sensing slot.

In a possible implementation, when the value of the sensing packet configuration information is the first value and a value of a bit in the sensing packet bitmap is 1, it indicates that the frame structure of the sensing packet is the first frame structure; or when the value of the sensing packet configuration information is the first value and the value of the bit in the sensing packet bitmap is 0, it indicates that the frame structure of the sensing packet is the second frame structure.

In a possible implementation, when the value of the sensing packet configuration information is the second value and a value of a bit in the sensing packet bitmap is 1, it indicates that the frame structure of the sensing packet is the first frame structure; or when the value of the sensing packet configuration information is the second value and the value of the bit in the sensing packet bitmap is 0, it indicates that the frame structure of the sensing packet is the third frame structure.

In a possible implementation, the control information further includes sensing control present information (sensing control present), and the sensing control present information indicates that the sensing control information exists in the control information.

In this embodiment of this application, the sensing control present information indicates that the control information includes the sensing control information, so that after receiving the control information, the sensing responder can learn of a manner of parsing the sensing control information based on the sensing control present information. This improves efficiency of parsing the sensing control information by the sensing responder.

In a possible implementation, the sensing control information further includes information indicating a length of the sensing packet bitmap.

In this embodiment of this application, the length of the sensing packet bitmap may be determined based on a number of sensing slots in one sensing round, or may be determined based on a number of sensing packets in one sensing round.

In a possible implementation, the sensing control information further includes at least one of the following: information indicating a sequence number of a sensing sequence; information indicating a spreading factor of the sensing sequence; and information indicating a number of repetitions of a sensing symbol, where the sensing symbol is obtained based on the sensing sequence.

According to a second aspect, an embodiment of this application provides a sensing communication method. The method is applied to a sensing requester. The method includes:
determining a sensing request; and sending the sensing request, where a MAC payload of the sensing request includes sensing initiator address information, and the sensing initiator address information indicates an address of a sensing initiator.

In a possible implementation, a MAC header of the sensing request does not carry a destination address field, or the MAC header carries the destination address field and an address indicated by the destination address field is a broadcast address.

In a possible implementation, the sensing request further includes at least one of the following information:
information indicating whether the sensing initiator uses mono-static sensing; information about a number of sensing responders recommended in the sensing request; and information about an address of a sensing responder recommended in the sensing request.

In a possible implementation, the sensing request further includes any one of the following information: information indicating that a sensing response is to be transmitted via ultra wideband UWB, and information indicating that the sensing response is to be transmitted via out of band OOB.

In a possible implementation, the sensing request further includes any one of the following information: information indicating that the sensing response and the sensing request are to be transmitted in a same beacon interval, and information indicating that the sensing response is to be transmitted in a beacon interval after a beacon interval in which the sensing request is located.

In a possible implementation, the sensing request further includes address type information, the address type information indicates a type of the address of the sensing initiator or a type of the address of the sensing responder recommended in the sensing request, and the type includes a short address or an extended address.

In a possible implementation, the method further includes:
receiving an acknowledgment ACK frame or a data frame for the sensing request, where the ACK frame or the data frame is used to acknowledge the sensing request and acknowledge the sensing responder recommended in the sensing request; the ACK frame or the data frame is used to acknowledge the sensing request and reject the sensing responder recommended in the sensing request; or the ACK frame or the data frame is used to reject the sensing request.

In a possible implementation, the method further includes: receiving the sensing response from the sensing responder, where the sensing response includes sensing responder address information, and the sensing responder address information indicates the address of the sensing responder.

In a possible implementation, the sensing response further includes the address type information, and the address type information indicates a type of the address of the sensing responder.

For beneficial effects of the second aspect, refer to the first aspect. Details are not described in embodiments of this application.

According to a third aspect, an embodiment of this application provides a sensing communication method. The method is applied to a sensing initiator. The method includes:
determining control information; and sending the control information, where the control information includes sensing control information, the sensing control information includes a sensing packet bitmap (sensing packet bitmap), and each bit in the sensing packet bitmap indicates a frame structure of a corresponding sensing packet, or each bit in the sensing packet bitmap indicates a frame structure of a sensing packet in a corresponding sensing slot.

In this embodiment of this application, a frame structure is configured for each sensing packet based on the control information, or the frame structure is configured for each sensing slot based on the control information. This effectively improves flexibility of configurations of sensing packets.

According to a fourth aspect, an embodiment of this application provides a sensing communication method. The method is applied to a sensing responder. The method includes:
receiving control information; and parsing the control information, where the control information includes sensing control information, the sensing control information includes a sensing packet bitmap (sensing packet bitmap), and each bit in the sensing packet bitmap indicates a frame structure of a corresponding sensing packet, or each bit in the sensing packet bitmap indicates a frame structure of a sensing packet in a corresponding sensing slot.

With reference to the third aspect or the fourth aspect, in a possible implementation, the sensing control information further includes sensing packet configuration information (sensing packet config.), and when a value of the sensing packet configuration information is a first value, it indicates that the frame structure of the sensing packet is a first frame structure or a second frame structure, or when the value of the sensing packet configuration information is a second value, it indicates that the frame structure of the sensing packet is the first frame structure or a third frame structure.

In this embodiment of this application, the sensing packet configuration information may indicate one or two of N frame structures defined in a protocol, where N is a positive integer. Based on the sensing packet configuration information or a sensing packet bitmap, a sensing responder can effectively learn of frame structures of sensing packets in all sensing slots of a sensing round. This improves flexibility of configurations of sensing packets, and ensures that two communication parties can agree on the configurations of the sensing packets in the sensing slot.

With reference to the third aspect or the fourth aspect, in a possible implementation, when the value of the sensing packet configuration information is the first value and a value of a bit in the sensing packet bitmap is 1, it indicates that the frame structure of the sensing packet is the first frame structure; or when the value of the sensing packet configuration information is the first value and the value of the bit in the sensing packet bitmap is 0, it indicates that the frame structure of the sensing packet is the second frame structure.

With reference to the third aspect or the fourth aspect, in a possible implementation, when the value of the sensing packet configuration information is the second value and a value of a bit in the sensing packet bitmap is 1, it indicates that the frame structure of the sensing packet is the first frame structure; or when the value of the sensing packet configuration information is the second value and the value of the bit in the sensing packet bitmap is 0, it indicates that the frame structure of the sensing packet is the third frame structure.

With reference to the third aspect or the fourth aspect, in a possible implementation, the control information further includes sensing control present information (sensing control present), and the sensing control present information indicates that the sensing control information exists in the control information.

In this embodiment of this application, the sensing control present information indicates that the control information includes the sensing control information, so that after receiving the control information, the sensing responder can learn of a manner of parsing the sensing control information based on the sensing control present information. This improves efficiency of parsing the sensing control information by the sensing responder.

With reference to the third aspect or the fourth aspect, in a possible implementation, the sensing control information further includes information indicating a length of the sensing packet bitmap.

In this embodiment of this application, the length of the sensing packet bitmap may be determined based on a number of sensing slots in one sensing round, or may be determined based on a number of sensing packets in one sensing round.

With reference to the third aspect or the fourth aspect, in a possible implementation, the sensing control information further includes at least one of the following: information indicating a sequence number of a sensing sequence; information indicating a spreading factor of the sensing sequence; and information indicating a number of repetitions of a sensing symbol, where the sensing symbol is obtained based on the sensing sequence.

According to a fifth aspect, an embodiment of this application provides a communication apparatus, configured to perform the method according to the first aspect or any possible implementation of the first aspect. The communication apparatus includes units that perform the method according to the first aspect or any possible implementation of the first aspect.

According to a sixth aspect, an embodiment of this application provides a communication apparatus, configured to perform the method according to the second aspect or any possible implementation of the second aspect. The communication apparatus includes units that perform the method according to the second aspect or any possible implementation of the second aspect.

According to a seventh aspect, an embodiment of this application provides a communication apparatus, configured to perform the method according to the third aspect or any possible implementation of the third aspect. The communication apparatus includes units that perform the method according to the third aspect or any possible implementation of the third aspect.

According to an eighth aspect, an embodiment of this application provides a communication apparatus, configured to perform the method according to the fourth aspect or any possible implementation of the fourth aspect. The communication apparatus includes units that perform the method according to the fourth aspect or any possible implementation of the fourth aspect.

In the fifth aspect to the eighth aspect, the communication apparatus and the communication apparatus may include a transceiver unit and a processing unit. For specific descriptions of the transceiver unit and the processing unit, refer to apparatus embodiments provided below.

According to a ninth aspect, an embodiment of this application provides a communication apparatus. The communication apparatus includes a processor, configured to perform the method according to any one of the first aspect to the fourth aspect or any possible implementation. Alternatively, the processor is configured to execute a program stored in the memory. When the program is executed, the method according to any one of the first aspect to the fourth aspect or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to a tenth aspect, an embodiment of this application provides a communication apparatus. The communication apparatus includes a logic circuit and an interface. The logic circuit is coupled to the interface. The interface is configured to input a sensing request. The logic circuit is configured to determine whether an address of the communication apparatus matches an address of a sensing initiator. The interface is further configured to output the sensing request when the address of the communication apparatus does not match the address of the sensing initiator; or the logic circuit is further configured to parse the sensing request when the address of the communication apparatus matches the address of the sensing initiator.

In a possible implementation, the interface is further configured to: when the address of the communication apparatus does not match the address of the sensing initiator, after outputting the sensing request, input an acknowledgment ACK frame or a data frame for the sensing request; or when the address of the communication apparatus matches the address of the sensing initiator, output an acknowledgment ACK frame or a data frame for the sensing request.

In a possible implementation, the interface is further configured to output a sensing response.

In a possible implementation, the interface is further configured to output control information when the address of the communication apparatus matches the address of the sensing initiator.

It may be understood that, for the communication apparatus according to the tenth aspect, refer to the first aspect or the following specific implementations.

According to an eleventh aspect, an embodiment of this application provides a communication apparatus. The communication apparatus includes a logic circuit and an interface. The logic circuit is coupled to the interface. The logic circuit is configured to determine a sensing request. The interface is configured to output the sensing request.

In a possible implementation, the interface is further configured to input a sensing response.

It may be understood that, for the communication apparatus according to the eleventh aspect, refer to the second aspect or the following specific implementations.

According to a twelfth aspect, an embodiment of this application provides a communication apparatus. The communication apparatus includes a logic circuit and an interface. The logic circuit is coupled to the interface. The logic circuit is configured to determine control information. The interface is configured to output the control information.

According to a thirteenth aspect, an embodiment of this application provides a communication apparatus. The communication apparatus includes a logic circuit and an interface. The logic circuit is coupled to the interface. The interface is configured to input control information. The logic circuit is configured to parse the control information.

In a possible implementation, the interface is further configured to output a sensing response.

It may be understood that, for the communication apparatuses according to the twelfth aspect and the thirteenth aspect, refer to the third aspect, the fourth aspect, or the following specific implementations.

According to a fourteenth aspect, an embodiment of this application provides a computer-readable storage medium. The computer-readable storage medium is configured to store a computer program. When the computer program is run on a computer, the method according to any one of the first aspect to the fourth aspect or any possible implementation is performed.

According to a fifteenth aspect, an embodiment of this application provides a computer program product. The computer program product includes a computer program. When the computer program product runs on a computer, the method according to any one of the first aspect to the fourth aspect or any possible implementation is performed.

According to a sixteenth aspect, an embodiment of this application provides a computer program. When the computer program is run on a computer, the method according to any one of the first aspect to the fourth aspect or any possible implementation is performed.

According to a seventeenth aspect, an embodiment of this application provides a communication system. The communication system includes a sensing initiator and a sensing requester. The sensing initiator is configured to perform the method according to the first aspect or any possible implementation of the first aspect, and the sensing requester is configured to perform the method according to the second aspect or any possible implementation of the second aspect.

In a possible implementation, the communication system further includes a relay node.

According to an eighteenth aspect, an embodiment of this application provides a communication system. The communication system includes a relay node and a sensing requester. The relay is configured to perform the method according to the first aspect or any possible implementation of the first aspect, and the sensing requester is configured to perform the method according to the second aspect or any possible implementation of the second aspect.

According to a nineteenth aspect, an embodiment of this application provides a communication system. The communication system includes a sensing initiator and a sensing responder. The sensing initiator is configured to perform the method according to the third aspect or any possible implementation of the third aspect, and the sensing responder is configured to perform the method according to the fourth aspect or any possible implementation of the fourth aspect.

In a possible implementation, the communication system further includes a sensing requester, and the sensing requester is configured to perform the method according to the second aspect or any possible implementation of the second aspect.

### BRIEF DESCRIPTION OF DRAWINGS

FIG. 1a is a diagram of an architecture of a communication system according to an embodiment of this application;
FIG. 1b is a diagram of an architecture of a communication system according to an embodiment of this application;
FIG. 2a is a diagram of a scenario of a sensing communication method according to an embodiment of this application;
FIG. 2b is a diagram of a scenario of a sensing communication method according to an embodiment of this application;
FIG. 3a is a diagram of a scenario of a basic structure-based sensing communication method according to an embodiment of this application;
FIG. 3b is a diagram of a scenario of a basic structure-based sensing communication method according to an embodiment of this application;
FIG. 3c is a diagram of a scenario of a hierarchical structure-based sensing communication method according to an embodiment of this application;
FIG. 3d is a diagram of a scenario of a hierarchical structure-based sensing communication method according to an embodiment of this application;
FIG. 4a is a flowchart of a basic structure-based method according to an embodiment of this application;
FIG. 4b is a flowchart of a basic structure-based method according to an embodiment of this application;
FIG. 4c is a flowchart of a basic structure-based method according to an embodiment of this application;
FIG. 5a is a flowchart of a hierarchical structure-based method according to an embodiment of this application;
FIG. 5b is a flowchart of a hierarchical structure-based method according to an embodiment of this application;
FIG. 5c is a flowchart of a hierarchical structure-based method according to an embodiment of this application;
FIG. 6a is a diagram of a sensing time structure of a beacon interval according to an embodiment of this application;
FIG. 6b is a diagram of a relationship among a sensing block, a sensing round, and a sensing slot according to an embodiment of this application;
FIG. 7 is a diagram of frame structures of three sensing packets according to an embodiment of this application;
FIG. 8 is a diagram of a sensing symbol according to an embodiment of this application;
FIG. 9 is a diagram of a configuration of a sensing packet according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices that include a series of steps or units are not limited to listed steps or units, but instead, optionally further include steps units that are not listed, or optionally further include other steps or units inherent to these processes, methods, products, devices.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in this specification may be combined with other embodiments.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a and b and c".

Embodiments of this application provide a sensing communication method and an apparatus, to further improve a sensing request or control information, so that two communication parties can further exchange sensing-related information, to improve information exchange efficiency.

The following explains and describes a communication system in embodiments of this application.

The technical solutions provided in embodiments of this application are applicable to a UWB-based wireless personal area network (wireless personal area network, WPAN). For example, the method provided in embodiments of this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in embodiments of this application may be further applied to the following communication system, for example, may be applied to an internet of things (internet of things, IoT) system, a vehicle to X (Vehicle to X, V2X) system, or a narrow band internet of things (narrow band internet of things, NB-IoT) system; for another example, may be applied to a device in the vehicle to X, an internet of things node or a sensor in the internet of things (internet of things, IoT), a smart camera, a smart remote control, or a smart water meter in smart home, and a sensor in a smart city; and for another example, may be applied to an LTE frequency division duplex (frequency division duplex, FDD) system, LTE time division duplex (time division duplex, TDD), a long term evolution (long term evolution, LTE) system, a 5th-generation (5th-generation, 5G) communication system, or a 6th-generation (6th-generation, 6G) communication system.

A UWB technology is a new wireless communication technology. In the UWB technology, data is transmitted through a nanosecond-level non-sinusoidal narrow pulse, and modulation is performed on pulses with very steep rise and fall time. Therefore, UWB occupies a wide spectrum range, so that a signal has a bandwidth of a Giga Hertz (GHz) magnitude. The bandwidth used by the UWB is usually higher than 500 MHz. A UWB system does not need to generate a sinusoidal carrier signal and may directly transmit an impulse sequence. Therefore, the UWB system has a wide spectrum and low average power. A UWB wireless communication system has advantages of a strong multi-path resolution capability, low power consumption, high confidentiality, and the like. This facilitates coexistence with other systems, thereby improving spectrum utilization and system capacity. In addition, in short-range communication application, transmit power of a UWB transmitter may be usually lower than 1 mW (milliwatt). Theoretically, interference generated by a UWB signal is only equivalent to white noise. This facilitates good coexistence between the ultra-wideband and existing narrowband communication. Therefore, both the UWB system and a narrowband (narrowband, NB) communication system can operate without interfering with each other. The method provided in embodiments of this application may be implemented by a communication apparatus in the wireless communication system. In a communication apparatus, a module that implements a function of the UWB system may be referred to as a UWB module (for example, may be configured to send a UWB pulse or receive a UWB pulse). A module that implements a function of the narrowband communication system may be referred to as a narrowband communication module. The UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application.

Embodiments of this application are mainly described by using a WPAN as an example, and in particular, by using a network used in IEEE 802.15 series standards as an example. However, a person skilled in the art easily understands that various aspects in embodiments of this application may be extended to other networks using various standards or protocols, for example, a wireless local area network (wireless local area network, WLAN), Bluetooth (Bluetooth), a high performance radio local area network (high performance radio local area network, HIPERLAN) (a wireless standard similar to the IEEE 802.11 standard, mainly used in Europe), a wide area network (wide area network, WAN), or another network that is currently known or developed in the future. Therefore, regardless of a used coverage area and a used wireless access protocol, the various aspects provided in embodiments of this application are applicable to any appropriate wireless network.

The method provided in embodiments of this application may be implemented by a communication apparatus in a wireless communication system. The communication apparatus may be an apparatus in the UWB system. For example, the communication apparatus may include but is not limited to a communication server, a router, a switch, a bridge, a computer, and a mobile phone. For another example, the communication apparatus may include a central control point, for example, a personal area network (personal area network, PAN) or a PAN coordinator. For another example, the communication apparatus may include user equipment (user equipment, UE). The user equipment may include various handheld devices, vehicle-mounted devices, wearable devices, internet of things (internet of things, IoT) devices, computing devices, other processing devices connected to a wireless modem, or the like that have a wireless communication function. Examples are not listed one by one herein. For another example, the communication apparatus may include a chip, and the chip may be disposed in a communication server, a router, a switch, or a user terminal. Examples are not listed one by one herein.

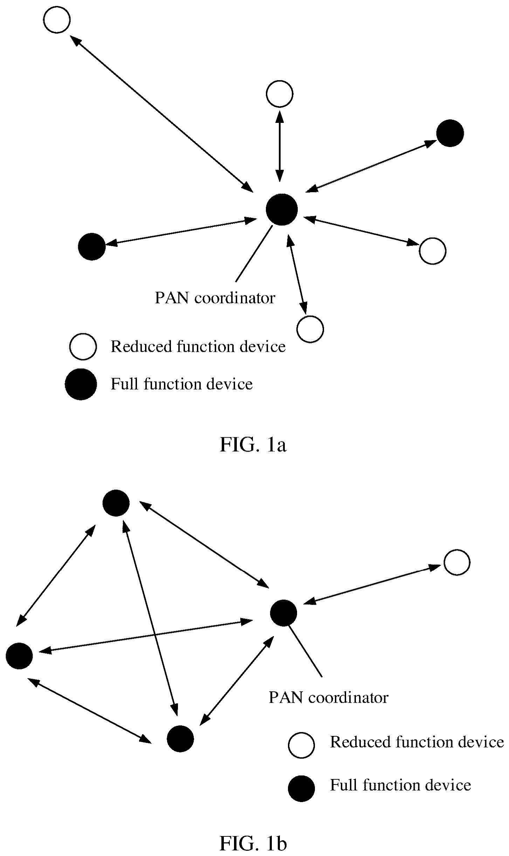

For example, FIG. 1a and FIG. 1b each are a diagram of an architecture of a communication system according to an embodiment of this application. FIG. 1a shows a star topology structure according to an embodiment of this application, and FIG. 1b shows a point-to-point topology structure according to an embodiment of this application. As shown in FIG. 1a, in a star topology, one central control node may perform data communication with one or more other devices. As shown in FIG. 1b, in a point-to-point topology structure, data communication may be performed between different devices. In FIG. 1a and FIG. 1b, both a full function device (full function device) and a reduced function device (reduced function device) may be understood as communication apparatuses shown in this application. The full function device and the reduced function device are relative to each other. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 1b is merely an example, and other three full function devices shown in FIG. 1b may also be used as PAN coordinators, which are not shown one by one herein.

It may be understood that the full-function device and the reduced function device shown in embodiments of this application are merely examples of the communication apparatus. Any communication apparatus that can implement the method provided in embodiments of this application falls within the protection scope of embodiments of this application. A sensing initiator, a sensing responder, and the like shown below may be full function devices, or may be reduced function devices. This is not limited in embodiments of this application.

The following describes a sensing scenario and a flowchart of a sensing communication method in embodiments of this application.

For example, the communication apparatus shown in embodiments of this application may include a sensing initiator (initiator), a sensing responder (responder) (or referred to as a sensing responder), and a sensing requester (or referred to as a sensing requesting device (requesting device) or an original requesting device (original requesting device)). The sensing initiator and the sensing responder are relative to each other. For example, if the sensing initiator is a party that initiates a sensing procedure, the sensing responder may be a party that responds to the party that initiates the sensing procedure.

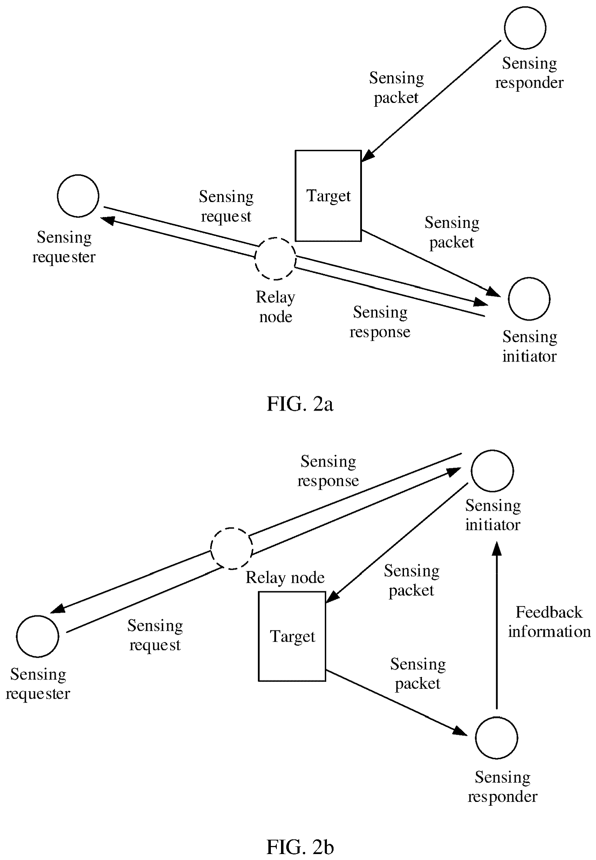

Based on the sensing initiator, the sensing responder, and the sensing requester shown above, embodiments of this application provide the following sensing scenarios. FIG. 2a and FIG. 2b each are a diagram of a scenario of a sensing communication method according to an embodiment of this application. FIG. 2a and FIG. 2b may be understood as sensing scenarios in which the sensing initiator, the sensing responder, and the sensing requester participate, for example, referred to as sensing by proxy (sensing by proxy). In FIG. 2a, the sensing requester sends a sensing request to the sensing initiator, the sensing responder is a transmitter of a sensing signal (a sensing packet shown in FIG. 2a and FIG. 2b), and the sensing initiator is a receiver of the sensing signal. After obtaining feedback information (for example, channel impulse response (channel impulse response, CIR) information), the sensing initiator needs to feed back the feedback information to the sensing requester through air interface transmission. In FIG. 2b, the sensing requester sends a sensing request to the sensing initiator, the sensing initiator is a transmitter of a sensing signal, and the sensing responder is a receiver of the sensing signal. After obtaining feedback information, the sensing responder needs to first feed back the feedback information to the sensing initiator through air interface transmission, and then the sensing initiator feeds back the feedback information to the sensing requester through air interface transmission.

Optionally, as shown in FIG. 2a and FIG. 2b, there may be at least one relay node between the sensing requester and the sensing initiator. In other words, information between the sensing request and the sensing initiator may need to be forwarded via at least one relay node.

The sensing packet (sensing packet) shown in FIG. 2a and FIG. 2b may be understood as a UWB signal or a sensing signal. An apparatus that receives the sensing packet may obtain related information of a target (for example, a speed, an angle, and a distance of the target) based on the sensing packet. It may be understood that although the control information is not shown in FIG. 2a and FIG. 2b, this should not be construed as a limitation on embodiments of this application. As shown in FIG. 2a and FIG. 2b, the sensing initiator may send the control information.

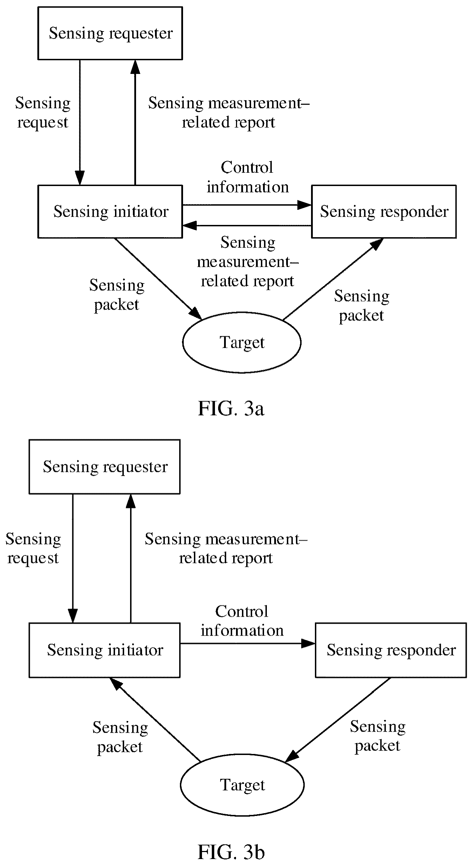

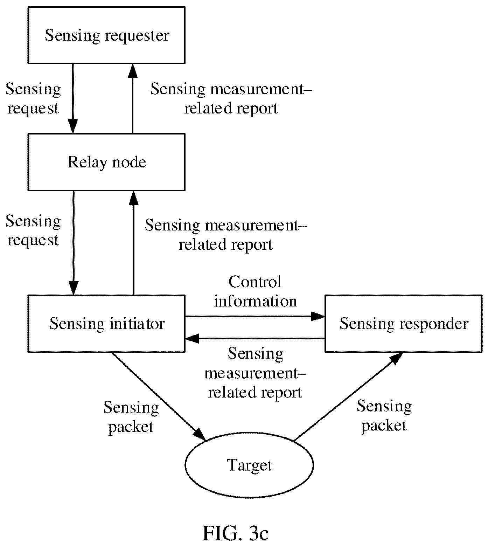

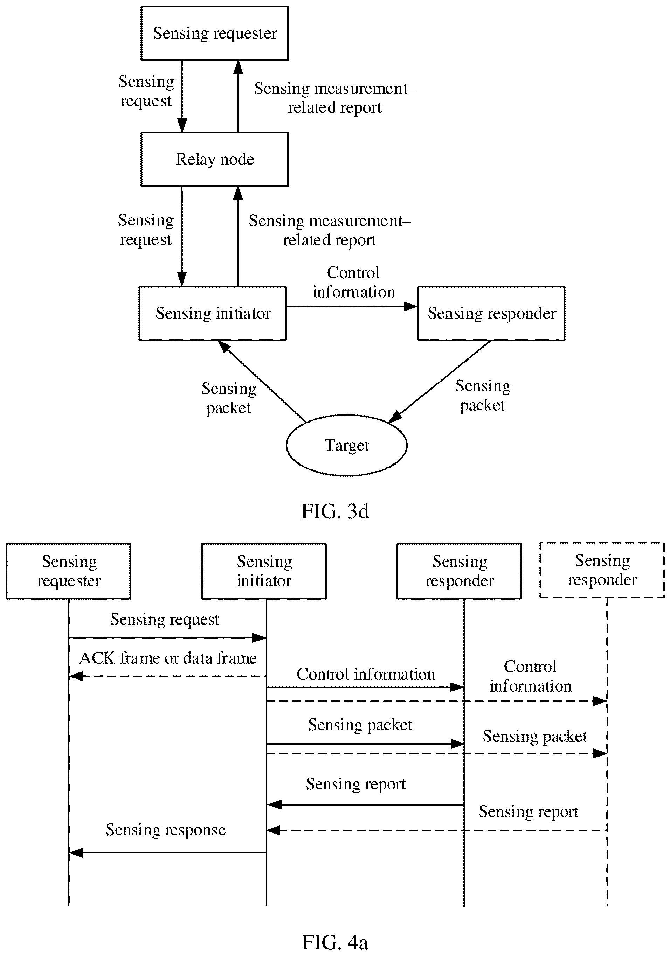

For the foregoing sensing by proxy scenarios, an embodiment of this application further provides two sensing by proxy structures: for example, a basic sensing by proxy structure (or referred to as a basic structure or a basic proxy structure for short) and a hierarchical sensing by proxy structure (or referred to as a hierarchical structure or a hierarchical proxy structure for short). The basic structure may not include a relay node, but the hierarchical structure may include a relay node. FIG. 3a and FIG. 3b each are a diagram of a scenario of a basic structure-based sensing communication method according to an embodiment of this application. FIG. 3c and FIG. 3d each are a diagram of a scenario of a hierarchical structure-based sensing communication method according to an embodiment of this application. Sensing measurement-related reports (sensing measurement-related reports) shown in FIG. 3a to FIG. 3d may be used to feed back the information (for example, the angle, the speed, and the distance) about the target to the sensing requester. It may be understood that the sensing measurement-related report shown in embodiments of this application may also be referred to as a sensing report (sensing report) for short, and the control information shown in embodiments of this application may also be referred to as a sensing control packet (sensing control packet). It may be understood that the sensing report may include the original CIR information, or include the information about the target obtained through CIR processing, for example, the speed, the angle, and the distance.

For FIG. 3a and FIG. 3c, after receiving the sensing request from the sensing requester, the sensing initiator may send the sensing control packet and a sensing packet to the sensing responder. After receiving the sensing packet and obtaining the information about the target, the sensing responder generates a sensing report, and sends the sensing report. After receiving the sensing report, the sensing initiator may send the sensing report to the sensing requester. A difference between FIG. 3a and FIG. 3c lies in whether the sensing request and the sensing report are forwarded between the sensing requester and the sensing initiator via a relay node. As shown in FIG. 3c, the sensing request and the sensing report may be forwarded between the sensing requester and the sensing initiator via the relay node.

For FIG. 3b and FIG. 3d, after receiving the sensing request from the sensing requester, the sensing initiator may send the sensing control packet to the sensing responder, so that the sensing responder sends the sensing packet based on the sensing control packet. After receiving the sensing packet and obtaining the related information of the target, the sensing initiator generates a sensing report, and sends the sensing report to the sensing initiator. A difference between FIG. 3b and FIG. 3d lies in whether the sensing request and the sensing report are forwarded between the sensing requester and the sensing initiator via a relay node. As shown in FIG. 3d, the sensing request and the sensing report may be forwarded between the sensing requester and the sensing initiator via the relay node.

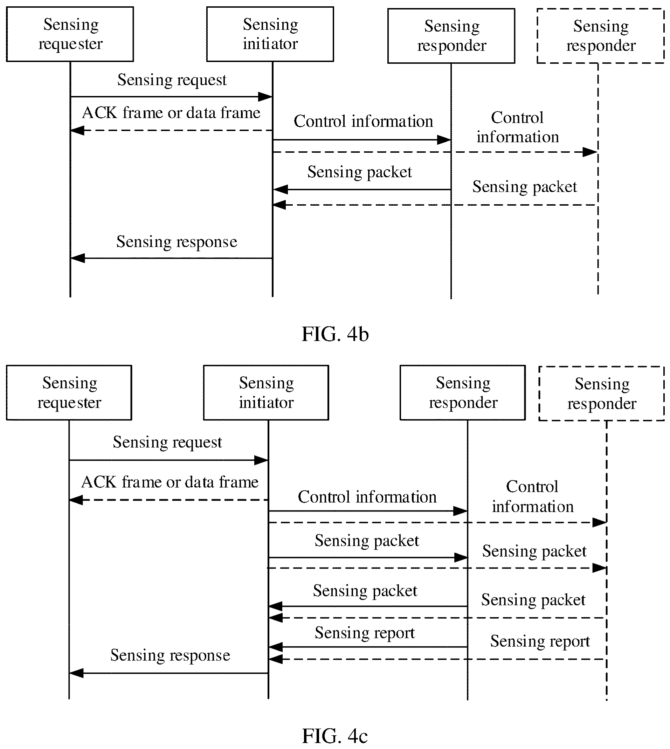

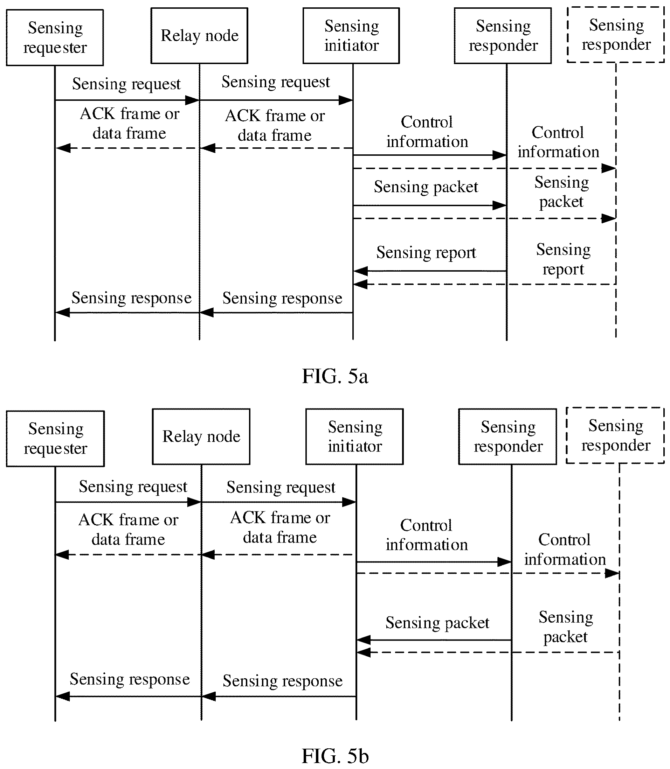

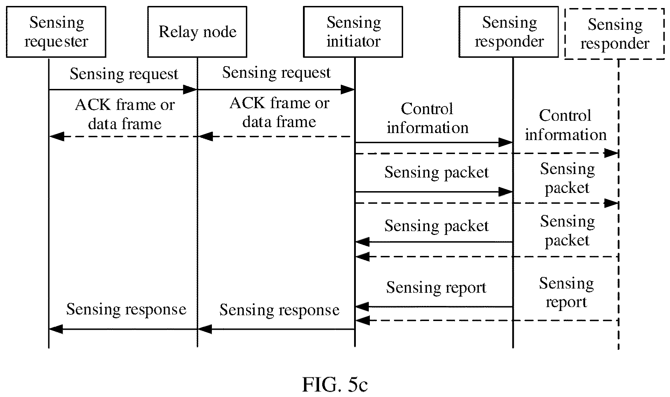

FIG. 4a to FIG. 4c each are a flowchart of a basic structure-based method according to an embodiment of this application. FIG. 5a to FIG. 5c each are a flowchart of a hierarchical structure-based method according to an embodiment of this application. When there is one sensing responder (for example, a sensing responder and information sent and received by the sensing responder that are indicated by solid lines in FIG. 4a to FIG. 4c and FIG. 5a to FIG. 5c), sensing by proxy scenarios shown in FIG. 4a to FIG. 4c and FIG. 5a to FIG. 5c may be referred to as bi-static sensing (bi-static sensing) by proxy scenarios. When there are a plurality of sensing responders (for example, sensing responders and information sent and received by the sensing responders that are indicated by dashed lines and sensing responders and information sent and received by the sensing responders that are indicated by solid lines in FIG. 4a to FIG. 4c and FIG. 5a to FIG. 5c), sensing by proxy scenarios shown in FIG. 4a to FIG. 4c and FIG. 5a to FIG. 5c may be referred to as multi-static sensing (multi-static sensing) by proxy scenarios. In FIG. 4c and FIG. 5c, a sensing report received by the sensing initiator is determined based on a sensing packet sent by the sensing initiator, and the sensing initiator may further determine related information of a target based on the sensing packet sent by the sensing responder.

For method procedures shown in FIG. 4a to FIG. 4c and FIG. 5a to FIG. 5c, refer to FIG. 2a, FIG. 2b, FIG. 3a, and FIG. 3b. Details are not described herein again. For descriptions of a sensing request, an ACK frame or a data frame, a sensing response, and control information shown in FIG. 4a to FIG. 4c and FIG. 5a to FIG. 5c, refer to the following descriptions.

For example, before sending the sensing request, the sensing requester may determine the sensing request (or referred to as generating the sensing request). For another example, before sending the control information, the sensing initiator may determine the control information (or referred to as generating the control information). For example, before sending the sensing responder, the sensing initiator may determine the sensing response (or referred to as generating the sensing response).

The flowcharts shown in FIG. 2a, FIG. 2b, FIG. 3a, FIG. 3b, FIG. 4a to FIG. 4c, and FIG. 5a to FIG. 5c shown above are applicable to all embodiments shown below.

The following describes the sensing request, the sensing response, and the control information shown in FIG. 2a, FIG. 2b, FIG. 3a, FIG. 3b, FIG. 4a to FIG. 4c, and FIG. 5a to FIG. 5c.

Currently, definitions of a sensing packet and a sensing report in a sensing scenario are clear in a protocol, and a design of a sensing request is not perfect. As a result, a communication apparatus that receives the sensing request may not learn of an apparatus that is a receiver of the sensing request, and a sensing procedure cannot be effectively performed in a timely manner. Therefore, a more detailed design is required for the sensing request.

A MAC payload of the sensing request in each of the foregoing diagrams may include sensing initiator address information. Optionally, the sensing request may further include at least one of the following: address type information, information indicating whether a sensing initiator uses mono-static sensing, related information of a sensing responder, and related information of a sensing response. It may be understood that the address type information, the information indicating whether the sensing initiator uses mono-static sensing, the related information of the sensing responder, and the related information of the sensing response shown herein may be included in the MAC payload, or may be included in a MAC header. This is not limited in embodiments of this application. For ease of description, the following uses an example in which the foregoing information is included in the MAC payload for description.

It may be understood that the foregoing information may exist in the MAC payload of the sensing request in a form of field (or subfield), exist in the MAC payload in a form of subelement, or the like. An existence form of the foregoing information is not limited in embodiments of this application. The following separately describes the foregoing information.

### 1. Sensing initiator address information

The sensing initiator address information indicates an address of a sensing initiator. In an example, based on the sensing initiator address information, the sensing initiator may effectively learn that a sensing request is sent to the sensing initiator. For example, if the address indicated by the sensing initiator address information in the sensing request matches (that is, is consistent with) an address of a communication apparatus that receives the sensing request, the communication apparatus that receives the sensing request may determine that the communication apparatus is the sensing initiator. In another example, based on the sensing initiator address information, a relay node may effectively learn that the sensing request is not sent to the relay node, and need to forward the sensing request to the sensing initiator indicated in the sensing initiator address information. For example, if the address indicated by the sensing initiator address information in the sensing request does not match (that is, is inconsistent with) the communication apparatus that receives the sensing request, the communication apparatus that receives the sensing request may determine that the communication apparatus is not the sensing initiator, and further need to forward the sensing request based on the sensing initiator address information.

The sensing initiator address information may be carried in a MAC payload of the sensing request.

In an example, when a MAC header (MAC header) of the sensing request does not carry a destination address (destination address) field, the MAC payload of the sensing request includes the sensing initiator address information. In this way, the communication apparatus can effectively learn of a destination address of the sensing request. For example, when a value of a destination address mode (destination address mode) field in the MAC header is 00 or 01, no destination address field exists in the MAC header, and the sensing initiator address information exists in the MAC payload. A destination address mode may be described as follows: The MAC header includes a frame control field (frame control field), and the frame control field may include the destination address mode field. A value of the destination address mode field is described as follows: 00 indicates that no destination personal area network identifier (personal area network ID, PAN ID) and no destination address field exists; 01 indicates reservation; 10 indicates that a type of the destination address is a short address; and 11 indicates that the type of the destination address is an extended address.

In another example, when the MAC header of the sensing request carries the destination address field, and an address indicated by the destination address field is a broadcast address, the MAC payload of the sensing request includes the sensing initiator address information. When the destination address field carries the broadcast address, it may indicate that there are more than one receiver of a message carrying the destination address field, or there are a plurality of receivers of the message carrying the destination address field. Therefore, if the address indicated by the destination address field is the broadcast address, the communication apparatus cannot effectively identify to which the sensing request is sent. In this case, the MAC payload of the sensing request shown in this embodiment of this application carries the sensing initiator address information, so that the communication apparatus can effectively learn of the receiver of the sensing request. For example, the broadcast address may be a broadcast short address (for example, defined as 0xffff) or a 64-bit broadcast MAC address (for example, defined as 0xffff ffff ffff ffff).

It may be understood that, when the MAC header carries the destination address field, and the address indicated by the destination address field is not the broadcast address, the MAC payload of the sensing request may not include the sensing initiator address information.

For example, the sensing request may include sensing initiator address present (sensing initiator address present) information, and the sensing initiator address present information may indicate whether the sensing initiator address information exists in the MAC payload of the sensing request. If a value of the sensing initiator address present information is 1, it may indicate that the sensing initiator address information exists in the MAC payload of the sensing request. Therefore, the communication apparatus that receives the sensing request may learn of, based on the sensing initiator address present information, whether the MAC payload includes the sensing initiator address information.

### 2. Related information of a sensing responder

The related information of the sensing responder may include at least one of the following: information about a number of sensing responders recommended by a sensing request; and information about an address of a sensing responder recommended in the sensing request. For example, the sensing request may include a sensing responder number (sensing responder number) and a sensing responder address (sensing responder address). For example, the sensing request may include a number n of recommended sensing responders and an address of each of the n sensing responders, where n is an integer greater than or equal to 0. For example, the sensing responder recommended in the sensing request may be a sensing responder that is recommended based on prior information of a target and that is closer to the target.

In this embodiment of this application, the related information of the sensing responder is included in the sensing request, so that after receiving the sensing request, the sensing initiator can effectively learn of the sensing responder with which the sensing initiator needs to perform a sensing procedure, to obtain related information of the target.

### 3. Information indicating whether a sensing initiator uses mono-static (mono-static) sensing

In an example, a sensing request may include information indicating the sensing initiator to use mono-static sensing. In this case, the sensing initiator and a sensing responder may perform sensing in a self-sending and self-receiving manner (for example, a radar mode). In another example, the sensing request may include information indicating the sensing initiator not to use mono-static sensing. In this case, the sensing initiator and the sensing responder may perform the sensing procedure shown in FIG. 4a, FIG. 4b, FIG. 4c, FIG. 5a, FIG. 5b, or FIG. 5c.

### 4. Related information of a sensing response

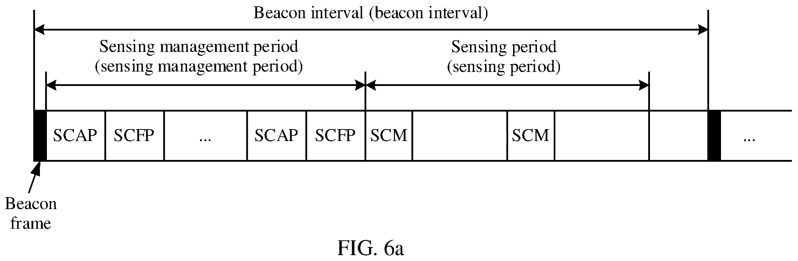

FIG. 6a is a diagram of a sensing time structure of a beacon interval according to an embodiment of this application. As shown in FIG. 6a, the beacon interval (beacon interval) may include a sensing management period (sensing management period) and a sensing period (sensing period). It may be understood that, because ultra wideband communication, narrowband communication, and Wi-Fi communication can coexist well, a blank after an application period shown in FIG. 6a may be understood as time in which UWB communication is not performed. For example, time corresponding to the blank may be used for narrowband and/or Wi-Fi communication.

The sensing management period may include one or more sensing contention access periods (sensing contention access periods, SCAPs) and one or more sensing contention free periods (sensing contention free periods, SCFPs). Each SCAP may include one or more beacon slots (beacon slots, BSs), and each SCFP may include one or more beacon slots. Channel access in a slot in the SCFP may be understood as scheduling-based channel access, and channel access in a slot in the SCAP may be understood as contention-based channel access. It may be understood that the beacon interval may include the sensing management period (as shown in FIG. 6a), or may not include the sensing management period. A sequence of the SCAP and the SCFP in the sensing management period shown in FIG. 6a is merely an example, and should not be construed as a limitation on embodiments of this application. It may be understood that a configuration of the beacon slot in the sensing management period may be different from a configuration of the slot in the sensing period. For example, duration (or referred to as a size) of the beacon slot in the sensing management period and duration of the slot in the sensing period may be different.

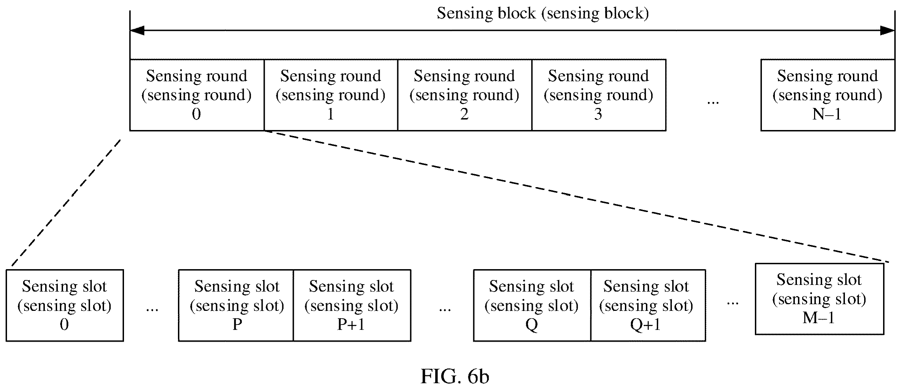

One sensing period may include one or more sensing blocks (sensing blocks). One sensing block may be a period of time dedicated to sensing. One sensing block may include one or more sensing rounds (sensing rounds), and one sensing round may include one or more sensing slots (sensing slots). Each sensing round may complete one time of independent sensing measurement and sensing result reporting. Each sensing slot may include one or more sensing packets, and the sensing packet may be used for sensing. In FIG. 6b, P is a positive integer less than Q, and Q is a positive integer less than M. N, M, P, and Q may all be positive integers. In a relationship diagram shown in FIG. 6b, slot indexes in a sensing round 1 to a sensing round N-1 are not shown. For the slot indexes in the sensing round 1 to the sensing round N-1, refer to a sensing round 0. A number of sensing slots included in each sensing round may be determined based on control information sent by a sensing initiator. Because one sensing round can complete one time of independent sensing measurement and result reporting, one sensing round may include the following three phases: a sensing control phase (sensing control phase), which is a phase in which the sensing initiator sends the control information, and is located in a 1^{st} sensing slot of the sensing round; a sensing phase (sensing phase), which is a phase in which the sensing initiator sends the sensing packet; and a measurement report phase (measurement report phase), which is a phase in which a sensing responder sends a sensing report, and is located in last one or more sensing slots of the sensing round.

Information transmitted in the beacon interval shown in FIG. 6a may be referred to as UWB transmission-based information, or referred to as in-band transmission-based information. Correspondingly, information transmitted outside the beacon interval may be referred to as out of band transmission-based information, or referred to as narrowband transmission-based information.

In an example, a sensing request may include information indicating that the sensing response is to be transmitted via UWB or information indicating that the sensing response is to be transmitted via OOB. When the sensing response is transmitted via the UWB, power consumption is low, confidentiality is high, and a rate is high. When the sensing response is transmitted via OOB, a coverage range is large. For example, both the sensing request and the sensing response may be transmitted via out of band. In this case, a sensing procedure may include the sensing control phase, the sensing phase, and the measurement report phase. For another example, the sensing request may be transmitted via UWB. For example, the sensing request is transmitted in the sensing management period, or is transmitted in the 1^{st} sensing slot (or the 1^{st} to an m^{th} sensing slots, where m is an integer greater than 1) in a 1^{st} sensing round of the sensing period. The sensing response is transmitted via OOB. In this case, the sensing procedure may include a sensing request phase (for example, a phase in which a sensing requester sends the sensing request) (sensing request phase), the sensing control phase, the sensing phase, and the measurement report phase. For another example, the sensing request is transmitted via OOB, and the sensing response is transmitted at the end of the sensing phase, or is transmitted in a sensing management phase of a subsequent beacon interval (for example, a beacon interval after a beacon interval in which the control information, the sensing packet, or the sensing report is located). In this case, the sensing procedure may include the sensing control phase, the sensing phase, the measurement report node, and a sensing response phase (sensing response phase). For example, the subsequent beacon interval may include a 1^{st} beacon interval after the beacon interval in which the control information, the sensing packet, or the sensing report is located.

In another example, the sensing request may include information indicating that the sensing response and the sensing request are to be transmitted in a same beacon interval or information indicating that the sensing response is to be transmitted in a beacon interval after a beacon interval in which the sensing request is located. In other words, both the sensing request and the sensing response are transmitted via UWB. For example, the sensing request may be transmitted in a sensing management period of a beacon interval, or transmitted in the 1^{st} sensing slot in the 1^{st} sensing round or transmitted in the 1^{st} to an n^{th} sensing slots in the sensing period, where n is an integer greater than 1. The sensing response may be transmitted when a sensing period in the same beacon interval ends, for example, transmitted in last one or more sensing slots in a last sensing round of the sensing period; or the sensing response is transmitted in a sensing management period of the beacon interval after the beacon interval in which the sensing request is located (for example, a next beacon interval of the beacon interval in which the sensing request is located). In the foregoing case, the sensing procedure may include the sensing request phase, the sensing control phase, the sensing phase, the measurement report phase, and the sensing response phase.

In another example, the sensing request may include information indicating that the sensing response is to be transmitted via UWB, the sensing request may include information indicating that the sensing response and the sensing request are to be transmitted in the same beacon interval or information indicating that the sensing response is to be transmitted in the beacon interval after the beacon interval in which the sensing request is located. For specific descriptions of the sensing response included in the sensing request, refer to the foregoing descriptions. Details are not described herein again.

### 5. Address type information

The address type information indicates a type of an address of a sensing initiator or a type of an address of a sensing responder recommended in a sensing request, and the type includes a short address or an extended address. Alternatively, the address type information in the sensing request may indicate the type of the address of the sensing initiator, and may indicate the type of the address of the sensing responder recommended in the sensing request. For example, the short address may occupy 2 bytes, and the extended address may occupy 8 bytes. It may be understood that, with evolution of a standard, more other address types may appear subsequently. This is not limited in embodiments of this application.

The type of the address of the sensing initiator or the type of the address of the sensing responder is indicated, so that after receiving the sensing request, the sensing initiator can learn of, based on the address type information, a length occupied by sensing initiator address information in the sensing request, and a length occupied by information about the address of the sensing responder recommended in the sensing request. Therefore, the sensing initiator can conveniently and quickly parse the sensing request.

The following provides descriptions by using an example in which the foregoing various information exists in the sensing request in a form of field.

For example, a MAC payload of the sensing request may include a sensing by proxy request information element (information element, IE), and the sensing by proxy request IE may be shown in Table 1. The address type information shown above may exist as an address type (address type) field in the sensing by proxy request IE, the sensing initiator address information may exist as a sensing initiator address (sensing initiator address) field in the sensing by proxy request IE, information indicating whether the sensing initiator uses mono-static sensing may exist as a mono-static indication (mono-static indication) field in the sensing by proxy request IE, related information of a sensing response may exist as a response OOB indication (response OOB indication) field or a recommended response (deferred response) field in the sensing by proxy request IE, and related information of the sensing responder may exist as a responder number (responder number) field or a responder address (responder address) field in the sensing by proxy request IE.

**Table 1**

| Field (field) | Size (size) | Description (description) |
|---|---|---|
| Address type | 1 bit (bit) | A value 0 indicates that a 2-byte short address is used; and a value 1 indicates that an 8-byte extended address is used |
| Sensing initiator address | 0/2/8 octets (octets) | A number of occupied bits is indicated by an address type field |
| Mono-static indication | 1 bit | A value 0 indicates that the sensing initiator does not use mono-static sensing; and a value 1 indicates that the sensing initiator uses mono-static sensing |
| Response OOB indication | 1 bit | A value 0 indicates that the sensing response is transmitted via UWB; and a value 1 indicates that the sensing response is transmitted via OOB |
| Recommended response | 1 bit | A value 0 indicates that the sensing response is transmitted in a current beacon interval; and a value 1 indicates that the sensing response is transmitted in a subsequent beacon interval |
| Responder number | 4 bits | Required sensing responder number (for example, n) |
| Responder address | Variable (variable) | Sensing responder address (for example, n addresses) |
| Feedback type | 1 bit | A value 0 indicates to feed back CIR data to a sensing requester; and a value 1 indicates to transmit, to the sensing requester, information (such as a distance, a speed, and an angle) about a target that is obtained through CIR processing |
| Feedback control | 2/4 bits | When the value of the feedback type is 0, the feedback control occupies 2 bits, and meanings are as follows: 00 indicates to feed back compressed CIR data and distance information to the sensing requester; 01 indicates to feed back only the compressed CIR data to the sensing requester; 10 indicates to feed back original CIR data and the distance information to the sensing requester; and 11 indicates to feed back only the original CIR data to the sensing requester |
| | | When the value of the feedback type is 1, the feedback control occupies 4 bits, and meanings are as follows: A first bit indicates whether a figure of merit (figure of merit, FoM) of ranging needs to be fed back, a value 0 of the 1^{st} bit indicates that no feedback is required, and a value 1 of the 1^{st} bit indicates that a feedback is required; a second bit indicates whether a figure of merit of speed information needs to be fed back, a value 0 of the 2^{nd} bit indicates that no feedback is required, and a value 1 of the 2^{nd} bit indicates that a feedback is required; a third bit indicates whether a figure of merit of an AOA needs to be fed back, a value 0 of the 3^{rd} bit indicates that no feedback is required, and a value 1 of the 3^{rd} bit indicates that a feedback is required; and a fourth bit indicates whether a figure of merit of a ZOA |
| | | needs to be fed back, a value 0 of the 4^{th} bit indicates that no feedback is required, and a value 1 of the 4^{th} bit indicates that a feedback is required. |

It may be understood that numbers of bits or numbers of bytes occupied by the fields shown in Table 1 are merely examples, and lengths of the fields may be further adjusted based on an actual requirement. Rankings of the fields in the sensing by proxy request IE are not limited in embodiments of this application. The feedback type (feedback type) field and the feedback control (feedback control) field shown in Table 1 are merely examples. The sensing by proxy request IE may have fewer fields than those in Table 1 (for example, the feedback type and the feedback control are not included), or have more fields than those in Table 1.

A communication apparatus may obtain the address of the sensing initiator based on a sensing initiator address field in a MAC payload and a destination address field in a MAC header in the sensing request, to determine whether the communication apparatus is a relay node in the sensing by proxy.

In a possible implementation, after receiving the sensing request, the sensing initiator may feed back, to the sensing requester, whether to accept the sensing request. For example, in the ACK frame or the data frame shown in FIG. 4a to FIG. 4c and FIG. 5a to FIG. 5c, the sensing initiator may feed back, via the ACK frame or the data frame, whether the sensing initiator accepts the sensing responder recommended in the sensing request, or feed back whether the sensing initiator accepts the sensing request. The ACK frame may also be referred to as an enhance ACK (enhance ACK, enh-ACK) frame.

In an example, the ACK frame may include a sensing by proxy request result feedback IE, and the sensing by proxy request result feedback ID may include a sensing by proxy (sensing by proxy, SBP) request status (SBP request status) field. The SBP request status field may include any one of the following: acknowledging the sensing request and acknowledging the sensing responder recommended in the sensing request (which may also be referred to as successful requesting and using the recommended sensing responder, as shown in Table 2), rejecting the request, and acknowledging the sensing request and rejecting the recommended sensing responder in the sensing request (which may also be referred to as successful requesting but using no recommended sensing responder). For the SBP request status, also refer to Table 2. It may be understood that a relationship between a value and a description of the BSP request status field shown in Table 2 is merely an example, and Table 2 should not be understood as a limitation on embodiments of this application. It may be understood that successful requesting shown in Table 2 may be understood as that the sensing initiator receives the sensing request.

**Table 2**

| **SBP** request status | Description |
|---|---|
| 00 | Successful requesting and using the recommended sensing responder |
| 01 | Rejecting the request |
| 10 | Successful requesting but using no recommended sensing responder |
| 11 | Reservation |

In another example, the data frame may include an SBP request status field. For content included in the SBP request status field, refer to descriptions of the ACK frame. Details are not described herein again. It may be understood that, for example, content in the SBP request status field shown in this embodiment of this application may exist in the ACK frame or the data frame in a form of field (or a subfield, or the like), or may exist in the ACK frame or the data frame in a form of subelement. A form of the content of the SBP request status field is not limited in embodiments of this application.

The sensing initiator feeds back the ACK frame or the data frame, to notify the sensing requester that the sensing initiator receives the sensing request, and further notify the sensing requester whether the sensing initiator uses the sensing responder recommended in the sensing request to perform a sensing procedure. When the ACK frame or the data frame indicates rejecting the request, the sensing initiator may still notify the sensing requester that the sensing initiator receives the sensing request, but does not perform a subsequent sensing by proxy operation.

After obtaining a sensing report, the sensing initiator may feed back the sensing response to the sensing initiator. The MAC payload in the sensing response includes sensing requester address information and the address type information, the sensing requester address information indicates an address of the sensing requester, and the address type information in the sensing response may indicate the type of the address of the sensing initiator.

In an example, based on the sensing requester address information, the sensing requester may effectively learn that the sensing response is sent to the sensing requester. For example, if the address indicated by the sensing requester address information in the sensing response matches (that is, is consistent with) an address of a communication apparatus that receives the sensing response, the communication apparatus that receives the sensing response may determine that the communication apparatus is the sensing requester.

In another example, based on the sensing requester address information, the relay node may effectively learn that the sensing response is not sent to the relay node, and need to forward the sensing response to the sensing requester indicated in the sensing requester address information. For example, if the address indicated by the sensing requester address information in the sensing response does not match (that is, is inconsistent with) the communication apparatus that receives the sensing response, the communication apparatus that receives the sensing response may determine that the communication apparatus is not the sensing requester, and further need to forward the sensing response based on the sensing requester address information. For related descriptions of the sensing requester address information and the address type information, refer to the sensing initiator address information. Details are not described herein again.

For example, the sensing response further includes the information about the address of the sensing responder and a sensing measurement report corresponding to each sensing responder.

In this embodiment of this application, information in the sensing request and the sensing response is improved, and a sensing by proxy scenario, for example, both a basic sensing by proxy structure and a hierarchical sensing by proxy structure may be effectively applicable. In addition, the sensing requester and the sensing responder exchange related information, so that the two communication parties can exchange more information.

In a sensing packet configuration method, a configuration of a sensing packet in a sensing round is fixed. For example, in a 1^{st} sensing slot of a sensing round, frame structures of sensing packets in all sensing slot of the sensing round may be configured based on the control information, the configured frame structures of the sensing packets are the same, and then, the sensing initiator or the sensing responder performs the sensing procedure by using the configured sensing packets. However, in the foregoing method, frame structures of sensing packets in all sensing slots of a sensing round are the same. Consequently, the frame structures of the sensing packets in all sensing slots are not flexibly configured.

In view of this, an embodiment of this application further provides a piece of control information, to improve flexibility of configurations of sensing packets in all sensing slots of a sensing round. For example, the control information may include sensing control information (or referred to as a sensing control IE), and the sensing control information may include at least one of the following: sensing control present information, sensing packet configuration information, related information of a sensing packet bitmap, and related information of a sensing symbol. Optionally, the control information may further include sensing feedback control information (or referred to as a sensing feedback IE). The following separately describes the sensing control information.

### 6. Sensing control present (sensing control present) information

The sensing control present information may indicate whether a sensing control field exists in sensing control information. The sensing control field may be used to carry information related to sensing control, for example, a sensing packet bitmap and sensing packet configuration information shown below. For descriptions of the sensing control field and the sensing control present information, refer to Table 3.

### 7. Sensing packet configuration information

The sensing packet configuration information may indicate one or two of N frame structures defined in a protocol, where N is a positive integer. Based on the sensing packet configuration information or a sensing packet bitmap, a sensing responder can effectively learn of frame structures of sensing packets in all sensing slots of a sensing round. This improves flexibility of configurations of sensing packets, and ensures that two communication parties can agree on the configurations of the frame structures of the sensing packets in the sensing slot.

In an example, when N=1, the sensing packet configuration information and the sensing packet bitmap may be omitted in the sensing control information. In another example, when N is greater than 1 and the sensing packet configuration information indicates one of the two frame structures defined in the protocol, sensing control information may include the sensing packet configuration information (for example, may not include the sensing packet bitmap). The sensing packet configuration information indicates that frame structures of sensing packets in all sensing slots of a sensing round are the same, and the frame structure of the sensing packet is the frame structure indicated by the sensing packet configuration information. In still another example, when N=2 and the sensing packet configuration information indicates two frame structures defined in the protocol, the sensing control information may include the sensing packet configuration information and the sensing packet bitmap shown below; or the sensing control information may include the sensing packet bitmap, and the sensing packet configuration information is omitted.

In yet another example, when N is greater than 2 and the sensing packet configuration information indicates two of the N frame structures, the sensing control information may include the sensing packet configuration information and the sensing packet bitmap. For example, when a value of the sensing packet configuration information is a first value, it indicates that a frame structure of a sensing packet may be a first frame structure or a second frame structure, or when the value of the sensing packet configuration information is a second value, it indicates that the frame structure of the sensing packet may be the first frame structure or a third frame structure. A packet length of the first frame structure is less than a packet length of the second frame structure, and the packet length of the first frame structure is less than a packet length of the third frame structure. It may be understood that, in a specific implementation, the sensing packet configuration information may have more values (for example, when the value of the sensing packet configuration information is a third value, it indicates that the frame structure of the sensing packet is the first frame structure or a fourth frame structure). This is not limited in embodiments of this application. For ease of description, the following uses an example in which N=3 and the sensing packet configuration information may indicate two of the three frame structures for description.

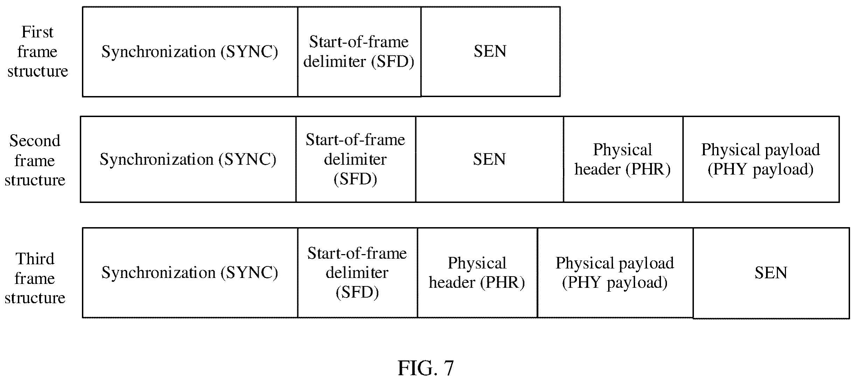

FIG. 7 is a diagram of frame structures of three sensing packets according to an embodiment of this application. As shown in FIG. 7, the first frame structure (for example, sens0) may include synchronization (synchronization, SYNC), a start-of-frame delimiter (start-of-frame delimiter, SFD), and sensing (sensing, SEN). The second frame structure (for example, sens1) may include: synchronization, an SFD, SEN, a physical header (physical header, PHR) (which may also be referred to as a physical header for short), and a physical payload (physical payload, PHY payload) (which may also be referred to as a valid payload). The third frame structure (for example, sens2) may include: synchronization, an SFD, a PHR, a physical payload, and SEN. Because the second frame structure and the third frame structure each include a physical header and a physical payload, the packet length of the second frame structure and the packet length of the third frame structure each are greater than the packet length of the first frame structure. It may be understood that the frame structures of the three sensing packets shown in FIG. 7 are merely examples, and should not be construed as a limitation on embodiments of this application.

For example, the sensing packet configuration information may occupy 2 bits. When the value of the sensing packet configuration information is 00, it indicates that the frame structure of the sensing packet is the first frame structure; when the value of the sensing packet configuration information is 01, it indicates that the frame structure of the sensing packet includes the first frame structure or the second frame structure; or when the value of the sensing packet configuration information is 10, it indicates that the frame structure of the sensing packet is the first frame structure or the third frame structure.

For another example, the sensing packet configuration information occupies N bits (for example, 3 bits), and each bit may correspond to one frame structure of the sensing packet. For example, when the value of the sensing packet configuration information is 001, it indicates that the frame structure of the sensing packet is the first frame structure; when the value of the sensing packet configuration information is 011, it indicates that the frame structure of the sensing packet includes the first frame structure or the second frame structure; or when the value of the sensing packet configuration information is 101, it indicates that the frame structure of the sensing packet includes the first frame structure or the third frame structure. Descriptions of the value of the sensing packet configuration information and the frame structure indicated by the value are merely examples. This is not limited in embodiments of this application.

For another example, when N is less than or equal to 8, the sensing packet configuration information may occupy 3 bits. For related descriptions of the value of the sensing packet configuration information, refer to Table 3.

**Table 3**

| Value of the sensing packet configuration information | Description |
|---|---|
| 001 (1 in decimal notation) | Indicates that the frame structure of the sensing packet is the first frame structure |
| 010 (2 in decimal notation) | Indicates that the frame structure of the sensing packet is the second frame structure |
| 011 (3 in decimal notation) | Indicates that the frame structure of the sensing packet is the third frame structure |
| 100 (4 in decimal notation) | Indicates that the frame structure of the sensing packet includes the first frame structure or the second frame structure |
| 101 (5 in decimal notation) | Indicates that the frame structure of the sensing packet includes the first frame structure or the third frame structure |
| ... | ... |

It may be understood that the foregoing listed relationship between the value of the sensing packet configuration information and the description is merely an example, and should not be construed as a limitation on embodiments of this application. In a specific implementation, the value of the sensing packet configuration information may be any one of values shown in Table 3, or possible values of the sensing packet configuration information are some values shown in Table 3.

### 8. Related information of a sensing packet bitmap

The related information of the sensing packet bitmap includes a sensing packet bitmap and information indicating a length of the sensing packet bitmap.

In an example, each bit in the sensing packet bitmap indicates a frame structure of a corresponding sensing packet. In other words, each bit may correspond to one sensing packet. For example, if one sensing round may include X sensing packets, a length of the sensing packet bitmap may be X, each bit corresponds to one sensing packet, and X is an integer greater than 1.

In another example, each bit in the sensing packet bitmap indicates a frame structure of a sensing packet in a corresponding sensing slot. In other words, each bit may correspond to one sensing slot. For example, if one sensing round may include M sensing slots, a length of the sensing packet bitmap may be M, and each bit corresponds to one sensing slot. It may be understood that one sensing slot may include one sensing packet, or include two sensing packets, or include three or more sensing packets. When each bit corresponds to one sensing slot, regardless of a number of sensing packets included in one sensing slot, frame structures of all sensing packets in the sensing slot are the same.

With reference to the foregoing descriptions that when the value of the sensing packet configuration information is the first value, it indicates that the frame structure of the sensing packet may be the first frame structure or the second frame structure, or when the value of the sensing packet configuration information is the second value, it indicates that the frame structure of the sensing packet may be the first frame structure or the third frame structure, and in this case, the sensing packet bitmap is described as follows: When the value of the sensing packet configuration information is the first value and a value of the bit in the sensing packet bitmap is 1, it indicates that the frame structure of the sensing packet is the first frame structure; or when the value of the sensing packet configuration information is the first value and the value of the bit in the sensing packet bitmap is 0, it indicates that the frame structure of the sensing packet is the second frame structure. Alternatively, when the value of the sensing packet configuration information is the second value and the value of the bit in the sensing packet bitmap is 1, it indicates that the frame structure of the sensing packet is the first frame structure; or when the value of the sensing packet configuration information is the second value and the value of the bit in the sensing packet bitmap is 0, it indicates that the frame structure of the sensing packet is the third frame structure. In other words, because there are N (for example, greater than or equal to 3) frame structures defined in a protocol, and a bit whose value is 1 and a bit whose value is 0 in the sensing packet bitmap correspond to two frame structures in total, how to set the two frame structures needs to be determined based on the value of the sensing packet configuration information.

For example, the value of the sensing packet configuration information is the first value, and the sensing packet bitmap is 0110 1110 (each bit corresponds to one sensing slot). In this case, it indicates that a frame structure of a sensing packet in a 1^{st} sensing slot, a frame structure of a sensing packet in a 4^{th} sensing slot, and a frame structure of a sensing packet in an 8^{th} sensing slot are all the second frame structure; and a frame structure of a sensing packet in a 2^{nd} sensing slot, a frame structure of a sensing packet in a 3^{rd} sensing slot, and frame structures of sensing packets in a 5^{th} to a 7^{th} sensing slots are all the first frame structure.

For another example, the value of the sensing packet configuration information is the second value, and the sensing packet bitmap is 0110 1110 (each bit corresponds to one sensing slot). In this case, it indicates that the frame structure of the sensing packet in the 1^{st} sensing slot, the frame structure of the sensing packet in the 4^{th} sensing slot, and the frame structure of the sensing packet in the 8^{th} sensing slot are all the third frame structure; and the frame structure of the sensing packet in the 2^{nd} sensing slot, the frame structure of the sensing packet in the 3^{rd} sensing slot, and the frame structures of the sensing packets in the 5^{th} to the 7^{th} sensing slots are all the first frame structure.

According to related requirements, total energy of a UWB pulse within 1 ms is fixed. Therefore, if a length of a UWB pulse is less than 1 ms, the UWB pulse may obtain a gating gain (gating gain). For example, one sensing packet may include one or more UWB pulses. If a sensing packet is shorter, energy of each pulse is larger. Conversely, if a length of a UWB pulse is greater than 1 ms, the UWB pulse cannot obtain a gating gain because energy of each pulse in the packet is fixed. From the perspective of the three sensing packet configurations shown in FIG. 7, because the first frame structure does not include a physical header and a physical payload, a length of the first frame structure is small; and because the second frame structure and the third frame structure include a physical header and a physical payload, lengths of the second frame structure and the third frame structure are great, especially when a load rate is low. For example, if a length of a sensing packet of the first frame structure is 0.5 ms, and a length of a sensing packet of the second frame structure or the third frame structure is 1 ms, the first frame structure has a gating gain of 3 dB. Therefore, to improve sensing performance, one sensing round shown in this embodiment of this application may include sensing packets of different configurations, to implement more flexible configurations of the sensing packets.

### 9. Related information of a sensing symbol

The related information of the sensing symbol includes at least one of the following: information indicating a sequence number of a sensing sequence, information indicating a spreading factor of the sensing sequence, and information indicating a number of repetitions of the sensing symbol, where the sensing symbol is obtained based on the sensing sequence.

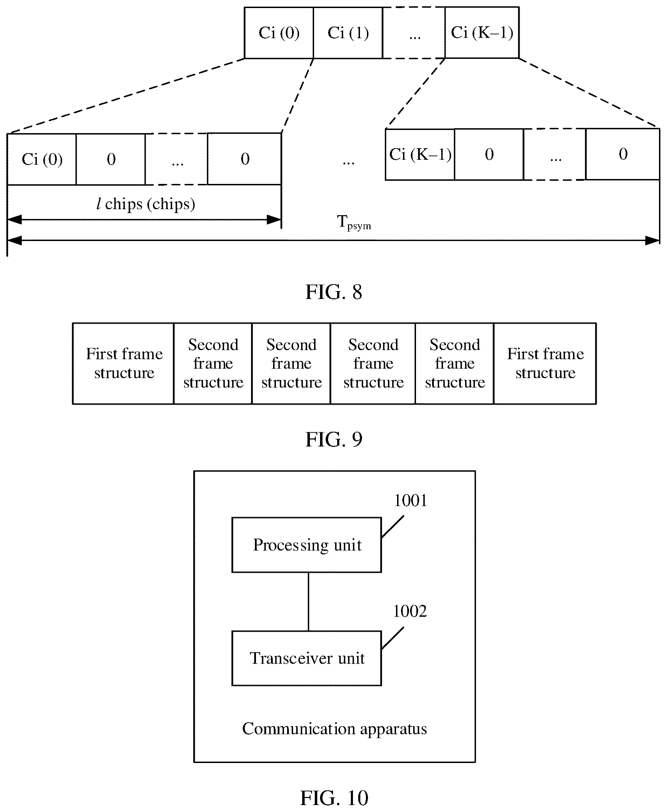

The SEN field shown in FIG. 7 may be determined based on repeated sensing symbols. Each sensing symbol may be obtained by extending a sensing sequence in time domain, and the sensing sequence (for example, an Ipatov sequence) may include three elements: +1, 0, and -1. FIG. 8 is a diagram of a sensing symbol according to an embodiment of this application. It may be understood that FIG. 8 shows only one sensing symbol as an example, and a synchronization field may include a plurality of sensing symbols shown in FIG. 8. Ci (0), Ci (1), ..., and Ci (K-1) in FIG. 8 indicate a sensing sequence whose length is K (which may also be understood as that the sensing sequence includes K elements), where K is an integer greater than 1. For example, K=31, K=91, or K=127. Examples are not listed one by one. *l* indicates an expansion factor (or referred to as a diffusion factor), and indicates that one element in the sensing sequence may be expanded to *l* elements. Each element in the sensing sequence whose length is K may be extended to *l* elements (corresponding to *l* chips). Therefore, one sensing symbol may include K**l* elements. For example, Ci (0) in the sensing sequence may be extended to Ci (0), 0, ..., and (*l*-2) zeros are omitted by using the ellipsis. Through time domain extension, original time of the sensing sequence can be effectively extended, and time occupied by the sensing symbol can be broadened. T_{psym} in FIG. 8 indicates occupation time of one sensing symbol.

The following provides descriptions by using an example in which the foregoing various information exists in a sensing request in a form of field.

For example, control information may include the sensing control IE shown in Table 4. As shown in Table 4, the sensing control IE may include at least one of the following: a common control (common control) field, a ranging control present (ranging control present) field, a data communication control present (data comm. control present) field, and a sensing control present (sensing control present) field, a time difference of arrival (time difference of arrival, TDoA) control present (TDoA control present) field, a ranging control field, a data communication control field, a sensing control field, and a TDoA control field.

**Table 4**

| Field | Size | Description |
|---|---|---|
| Common control | Variable | Common control information, including a session ID, a block length, a round length, a slot length, scheduling information, and the like |
| Ranging control present | 1 bit | A value 0 indicates that the ranging control field does not exist; and a value 1 indicates that the ranging control field exists |
| Data communication control present | 1 bit | A value 0 indicates that the data communication control field does not exist; and a value 1 indicates that the data communication control field exists |
| Sensing control present | 1 bit | A value 0 indicates that the sensing control field does not exist; and a value 1 indicates that the sensing control field exists |
| TDoA control present | 1 bit | A value 0 indicates that the TDoA control field does not exist; and a value 1 indicates that the TDoA control field exists |
| Ranging control | Variable | Ranging control information, including a ranging sequence, a number of repetitions, an expansion factor, and the like |
| Data communication control | Variable | Data transmission control information, including a synchronization sequence, an SFD length, a data rate, and the like |
| Sensing control | Variable | Sensing control information, which is specifically shown in Table 5 |
| TDoA control | Variable | |

For example, as shown in Table 5, the sensing control field may include the following subfields: a sensing mode (sensing mode), a sensing packet configuration (sensing packet config.), a sensing sequence index (sensing sequence index), a sensing symbol repetition number (sensing symbol repetition), a spreading factor (spreading factor), a bitmap length (bitmap length), and a sensing packet bitmap (sensing packet bitmap).

**Table 5**

| Subfield (Subfield) | Size | Description |
|---|---|---|
| Sensing mode | 2 bits | 00 indicates bi-static sensing; 01 indicates multi-static sensing; 10 indicates sensing by proxy; and 11 indicates coordinated sensing (or other sensing) |
| Sensing packet configuration | 2 bits | 00 indicates a first frame structure; 01 indicates the first frame structure or a second frame structure; 10 indicates the first frame structure or a third frame structure; and 11 indicates reservation |
| Sensing sequence index | 8 bits | Indicates a sequence number used for the sensing sequence |
| Sensing symbol repetition number | 8 bits | Indicates a number of repetitions of the sensing sequence symbol |
| Spreading factor | 2 bits | Indicates the spreading factor of the sensing sequence |
| Bitmap length | 0/8 bits | When a value of the sensing packet configuration is 00 or 11, the bitmap length does not exist; or when the value of the sensing packet configuration is 01 or 10, it indicates the bitmap length |
| Sensing packet bitmap | 0/Variable bits | When the value of the sensing packet configuration is 00 or 11, the sensing packet bitmap does not exist; when the value of the sensing packet configuration is 01, each bit indicates whether a sensing packet or a sensing slot uses the second frame structure, and if the bit is 1, the sensing packet or the sensing slot uses the first frame structure, or if the bit is 0, the sensing packet or the sensing slot uses the second frame structure; or when the value of the sensing packet configuration is 10, each bit indicates whether a sensing packet or a sensing slot uses the third frame structure, and if the bit is 1, the sensing packet or the sensing slot uses the first frame structure, or if the bit is 0, the sensing packet or the sensing slot uses the third frame structure. |

For example, when the value of the sensing packet configuration is 01, the bitmap length is 6, each bit corresponds to one sensing packet, and the sensing packet bitmap=100001, configurations of six sensing packets may be shown in FIG. 9.

It may be understood that numbers of bits or numbers of bytes occupied by the fields shown in Table 5 are merely examples, and lengths of the fields may be further adjusted based on an actual requirement. Rankings of the fields in the sensing control information are not limited in embodiments of this application. The sensing control IE may be used in a sensing by proxy scenario, or may be used in a common sensing scenario (for example, bi-static sensing or multi-static sensing).

It may be understood that the sensing request, the sensing response, and the control information shown above may be different embodiments, or the sensing request and the sensing response may be combined into one embodiment, or the sensing request, the sensing response, and the control information may be combined into one embodiment. For specific steps in embodiments, refer to at least one of FIG. 2a, FIG. 2b, FIG. 3a, FIG. 3b, FIG. 3c, FIG. 3d, FIG. 4a, FIG. 4b, FIG. 4c, FIG. 5a, FIG. 5b, and FIG. 5c.

Communication apparatuses provided in embodiments of this application are described below.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of software functional module. It should be noted that, in this application, module division is an example, and is merely a logical function division. In actual implementation, another division manner may be used. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a processing unit 1001 and a transceiver unit 1002. The transceiver unit 1002 may implement a corresponding communication function, and the processing unit 1001 is configured to process data. For example, the transceiver unit 1002 may also be referred to as a communication interface, or a communication unit.

In some embodiments of this application, the communication apparatus may be configured to perform an action performed by the sensing requester in the foregoing method embodiments. In this case, the communication apparatus may be the sensing requester or a component (for example, a chip or a system) that can be configured in the sensing requester. The transceiver unit 1002 is configured to perform a sending/receiving-related operation of the sensing requester in the foregoing method embodiments. The processing unit 1001 is configured to perform an operation related to processing of the sensing requester in the foregoing method embodiments.

For example, the processing unit 1001 is configured to determine a sensing request; and the transceiver unit 1002 is configured to output the sensing request.

It may be understood that the transceiver unit 1002 may send the sensing request to another communication apparatus, or the transceiver unit 1002 outputs the sensing request from the processing unit 1001 to another component in the sensing requester. Related descriptions of outputting other information by the transceiver unit are similar. Details are not described below again.

For example, the transceiver unit 1002 is configured to input an ACK frame or a data frame; and the processing unit 1001 is configured to parse the ACK frame or the data frame.

For example, the transceiver unit 1002 is configured to input a sensing response; and the processing unit 1001 is configured to parse the sensing response, to obtain related information of a target.

In some other embodiments of this application, the communication apparatus may be configured to perform an action performed by the relay node in the foregoing method embodiments. In this case, the communication apparatus may be the relay node or a component that can be configured in the relay node. The transceiver unit 1002 is configured to perform a sending/receiving-related operation of the relay node in the foregoing method embodiments. The processing unit 1001 is configured to perform an operation related to processing of the relay node in the foregoing method embodiments.

The transceiver unit 1002 is configured to input a sensing request. The processing unit 1001 is configured to: determine whether an address of the communication apparatus matches sensing initiator address information in the sensing request; and output the sensing request when the address of the communication apparatus does not match the sensing initiator address information in the sensing request.

For example, the transceiver unit 1002 is configured to input a sensing response, and the processing unit 1001 is configured to: determine whether the address of the communication apparatus matches sensing responder address information in the sensing response, and output the sensing response when the address of the communication apparatus does not match the sensing responder address information in the sensing response.

In some other embodiments of this application, the communication apparatus may be configured to perform an action performed by the sensing initiator in the foregoing method embodiments. In this case, the communication apparatus may be the sensing initiator or a component (for example, a chip or a system) that can be configured in the sensing initiator. The transceiver unit 1002 is configured to perform a sending/receiving-related operation of the sensing initiator in the foregoing method embodiments. The processing unit 1001 is configured to perform an operation related to processing of the sensing initiator in the foregoing method embodiments.

For example, the transceiver unit 1002 is configured to input a sensing request, and the processing unit 1001 is configured to: determine whether an address of the communication apparatus matches sensing initiator address information in the sensing request, and parse the sensing request when the address of the communication apparatus matches the sensing initiator address information in the sensing request.

For example, the processing unit 1001 is configured to determine control information; and the transceiver unit 1002 is configured to output the control information.

For example, the transceiver unit 1002 is configured to output a sensing response.

In some other embodiments of this application, the communication apparatus may be configured to perform an action performed by the sensing responder in the foregoing method embodiments. In this case, the communication apparatus may be the sensing responder or a component that can be configured in the sensing responder. The transceiver unit 1002 is configured to perform a sending/receiving-related operation of the sensing responder in the foregoing method embodiments. The processing unit 1001 is configured to perform an operation related to processing of the sensing responder in the foregoing method embodiments.

The transceiver unit 1002 is configured to input control information. The processing unit 1001 is configured to parse the control information.

For example, the processing unit 1001 is configured to determine a sensing report; and the transceiver unit 1002 is configured to output the sensing report.

Optionally, the communication apparatus may further include a storage unit. The storage unit may be configured to store instructions and/or data. The processing unit 1001 may read the instructions and/or data in the storage unit, so that the communication apparatus implements the foregoing method embodiments.

It may be understood that the specific descriptions of the transceiver unit and the processing unit described in embodiments of this application are merely examples. For specific functions, steps, or the like performed by the transceiver unit and the processing unit, refer to the foregoing method embodiments. Details are not described herein again.

In the foregoing embodiments, for descriptions of the sensing request, the sensing response, the control information, the ACK frame, the data frame, and the like, refer to the descriptions in the foregoing method embodiments. Details are not described herein again.

The foregoing describes the communication apparatus in embodiments of this application. The following describes possible product forms of the communication apparatus. It should be understood that any form of product that has a function of the communication apparatus in FIG. 10 falls within the protection scope of embodiments of this application. It should be further understood that the following descriptions are merely examples, and do not limit the product form of the communication apparatus in embodiments of this application.

In a possible implementation, in the communication apparatus shown in FIG. 10, the processing unit 1001 may be one or more processors, and the transceiver unit 1002 may be a transceiver or the transceiver unit 1002 may include a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is received by the processor.

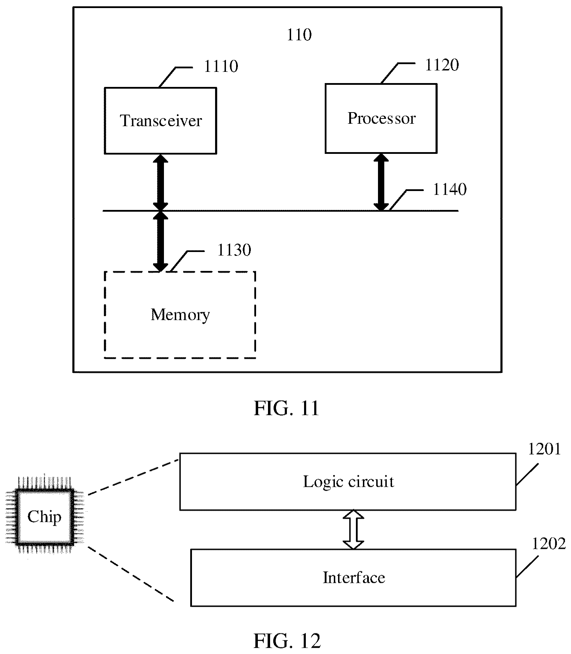

As shown in FIG. 11, a communication apparatus 110 includes one or more processors 1120 and a transceiver 1110.

In some embodiments of this application, the communication apparatus may be configured to perform steps, functions, or the like performed by the sensing requester in the foregoing method embodiments.

For example, the processor 1120 is configured to determine a sensing request; and the transceiver 1110 is configured to send the sensing request.

For example, the transceiver 1110 is configured to receive a sensing response; and the processor 1120 is configured to parse the sensing response, to obtain related information of a target.

For example, the transceiver 1110 is configured to input an ACK frame or a data frame; and the processor 1120 is configured to parse the ACK frame or the data frame.

In some other embodiments of this application, the communication apparatus may be configured to perform steps, functions, or the like performed by the relay node in the foregoing method embodiments.

The transceiver 1110 is configured to receive a sensing request; and the processor 1120 is configured to: determine whether an address of the communication apparatus matches sensing initiator address information in the sensing request, and forward the sensing request when the address of the communication apparatus does not match the sensing initiator address information in the sensing request.

For example, the transceiver 1110 is configured to receive a sensing response; and the processor 1120 is configured to: determine whether the address of the communication apparatus matches sensing responder address information in the sensing response, and forward the sensing response when the address of the communication apparatus does not match the sensing responder address information in the sensing response.

For example, the transceiver 1110 is further configured to forward the ACK or the data frame.

It may be understood that specific descriptions of the transceiver and the processor in embodiments of this application are merely examples. For specific functions, steps, or the like performed by the transceiver and the processor, refer to the foregoing method embodiments. Details are not described herein again.

In some other embodiments of this application, the communication apparatus may be configured to perform steps, functions, or the like performed by the sensing initiator in the foregoing method embodiments.

For example, the transceiver 1110 is configured to receive a sensing request; and the processor 1120 is configured to: determine whether an address of the communication apparatus matches sensing initiator address information in the sensing request, and parse the sensing request when the address of the communication apparatus matches the sensing initiator address information in the sensing request.

For example, the processor 1120 is configured to determine control information; and the transceiver 1110 is configured to send the control information.

For example, the transceiver 1110 is configured to output a sensing response.

In some other embodiments of this application, the communication apparatus may be configured to perform steps, functions, or the like performed by the sensing responder in the foregoing method embodiments.

The transceiver 1110 is configured to receive control information. The processor 1120 is configured to parse the control information.

For example, the processor 1120 is configured to determine a sensing report, and the transceiver 1110 is configured to send the sensing report.

In the foregoing embodiments, for descriptions of the sensing request, the sensing response, the control information, the ACK frame, the data frame, and the like, refer to the descriptions in the foregoing method embodiments. Details are not described herein again.

In each implementation of the communication apparatus shown in FIG. 11, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 110 may further include one or more memories 1130, configured to store program instructions, data, and/or the like. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. Optionally, at least one of the one or more memories may be included in the processor.

A specific connection medium between the transceiver 1110, the processor 1120, and the memory 1130 is not limited in embodiments of this application. In this embodiment of this application, the memory 1130, the processor 1120, and the transceiver 1110 are connected through a bus 1140 in FIG. 11. The bus is indicated by using a thick line in FIG. 11. A manner of a connection between other components is merely an example for description, and is not limited thereto. The bus may be classified into an address bus, a data bus, a control bus, and the like. For ease of indication, the bus is indicated by only one bold line in FIG. 11. However, it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combining with embodiments of this application may be directly implemented by a hardware processor, or may be implemented by using a combining of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of instruction or data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

For example, the processor 1120 is mainly configured to: process a communication protocol and communication data, control the entire communication apparatus, execute a software program, and process data of the software program. The memory 1130 is mainly configured to store the software program and data. The transceiver 1110 may include a control circuit and an antenna. The control circuit is mainly configured to: perform conversion between a baseband signal and a radio frequency signal and process the radio frequency signal. The antenna is mainly configured to receive and send a radio frequency signal in a form of electromagnetic wave. The input/output apparatus, for example, a touchscreen, a display, or a keyboard, is mainly configured to: receive data input by a user and output data to the user.

After the communication apparatus is powered on, the processor 1120 may read the software program in the memory 1130, interpret and execute instructions of the software program, and process data of the software program. When data needs to be sent in a wireless manner, the processor 1120 performs baseband processing on the to-be-sent data, and then outputs a baseband signal to a radio frequency circuit, and the radio frequency circuit performs radio frequency processing on the baseband signal, and then sends a radio frequency signal to the outside in a form of electromagnetic wave through the antenna. When data is sent to the communication apparatus, the radio frequency circuit receives the radio frequency signal through the antenna, converts the radio frequency signal into a baseband signal, and outputs the baseband signal to the processor 1120. The processor 1120 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in embodiments of this application may further have more components and the like than those in FIG. 11. This is not limited in embodiments of this application. The methods performed by the processor and the transceiver are merely examples. For specific steps performed by the processor and the transceiver, refer to the methods described above.

In another possible implementation, in the communication apparatus shown in FIG. 10, the processing unit 1001 may be one or more logic circuits, and the transceiver unit 1002 may be an input/output interface that is also referred to as a communication interface, an interface circuit, an interface, or the like. Alternatively, the transceiver unit 1002 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus shown in FIG. 12 includes a logic circuit 1201 and an interface 1202. In other words, the processing unit 1001 may be implemented by using the logic circuit 1201, and the transceiver unit 1002 may be implemented by using the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes a logic circuit 1201 and an interface 1202. It may be understood that the chip shown in embodiments of this application may include a narrowband chip, an ultra-bandwidth chip, or the like. This is not limited in embodiments of this application. The step of sending the sensing packet shown above may be performed by the ultra-bandwidth chip, and whether the remaining steps are performed by the ultra-bandwidth chip is not limited in embodiments of this application.

In this embodiment of this application, the logic circuit and the interface may be coupled to each other. A specific manner of connection between the logical circuit and the interface is not limited in embodiments of this application.

In some embodiments of this application, the communication apparatus may be configured to perform steps, functions, or the like performed by the sensing requester in the foregoing method embodiments.

For example, the logic circuit 1201 is configured to determine a sensing request; and the interface 1202 is configured to output the sensing request.

For example, the interface 1202 is configured to input a sensing response; and the logic circuit 1201 is configured to parse the sensing response, to obtain related information of a target.

For example, the interface 1202 is configured to input an ACK frame or a data frame; and the logic circuit 1201 is configured to parse the ACK frame or the data frame.

In some other embodiments of this application, the communication apparatus may be configured to perform steps, functions, or the like performed by the relay node in the foregoing method embodiments.

The interface 1202 is configured to input a sensing request. The logic circuit 1201 is configured to: determine whether an address of the communication apparatus matches sensing initiator address information in the sensing request; and output the sensing request when the address of the communication apparatus does not match the sensing initiator address information in the sensing request.

For example, the interface 1202 is configured to input a sensing response; and the logic circuit 1201 is configured to: determine whether the address of the communication apparatus matches sensing responder address information in the sensing response, and output the sensing response when the address of the communication apparatus does not match the sensing responder address information in the sensing response.

For example, the interface 1202 is further configured to output the ACK frame or the data frame.

In some other embodiments of this application, the communication apparatus may be configured to perform steps, functions, or the like performed by the sensing initiator in the foregoing method embodiments.

For example, the interface 1202 is configured to input a sensing request, and the logic circuit 1201 is configured to: determine whether an address of the communication apparatus matches sensing initiator address information in the sensing request, and parse the sensing request when the address of the communication apparatus matches the sensing initiator address information in the sensing request.

For example, the logic circuit 1201 is configured to determine control information; and the interface 1202 is configured to output the control information.

For example, the interface 1202 is configured to output a sensing response.

In some other embodiments of this application, the communication apparatus may be configured to perform steps, functions, or the like performed by the sensing responder in the foregoing method embodiments.

The interface 1202 is configured to input control information. The logic circuit 1201 is configured to parse the control information.

For example, the logic circuit 1201 is configured to determine a sensing report; and the interface 1202 is configured to output the sensing report.

It may be understood that specific descriptions of the logic circuit and the interface in embodiments of this application are merely examples. For specific functions, steps, or the like performed by the logic circuit and the interface, refer to the foregoing method embodiments. Details are not described herein again.

In the foregoing embodiments, for descriptions of the sensing request, the sensing response, the control information, the ACK frame, the data frame, and the like, refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in embodiments of this application.

An embodiment of this application further provides a communication system. The communication system includes a sensing initiator and a sensing requester. The method performed by the sensing initiator and the sensing requester is described above. In a possible implementation, the communication system further includes a relay node. An embodiment of this application provides a communication system. The communication system includes a relay node and a sensing requester. The method performed by the relay node and the sensing requester is described above. An embodiment of this application provides a communication system. The communication system includes a sensing initiator and a sensing responder. The method performed by the sensing initiator and the sensing responder is described above.

In addition, this application further provides a computer program. The computer program is used to implement the operations and/or processing performed by the sensing requester in the method provided in this application.

This application further provides a computer program. The computer program is used to implement the operations and/or processing performed by the relay node in the method provided in this application.

This application further provides a computer program. The computer program is used to implement the operations and/or processing performed by the sensing initiator in the method provided in this application.

This application further provides a computer program. The computer program is used to implement operations and/or processing performed by the sensing responder in the method provided in this application.

This application further provides a computer-readable storage medium. The computer-readable storage medium stores computer code. When the computer code is run on a computer, the computer is enabled to perform operations and/or processing performed by the sensing requester in the method provided in this application.

This application further provides a computer-readable storage medium. The computer-readable storage medium stores computer code. When the computer code is run on a computer, the computer is enabled to perform operations and/or processing performed by the relay node in the method provided in this application.

This application further provides a computer-readable storage medium. The computer-readable storage medium stores computer code. When the computer code is run on a computer, the computer is enabled to perform operations and/or processing performed by the sensing initiator in the method provided in this application.

This application further provides a computer-readable storage medium. The computer-readable storage medium stores computer code. When the computer code is run on a computer, the computer is enabled to perform operations and/or processing performed by the sensing responder in the method provided in this application.

This application further provides a computer program product. The computer program product includes computer code or a computer program. When the computer code or the computer program is run on a computer, the operations and/or processing performed by the sensing requester in the method provided in this application are/is performed.

This application further provides a computer program product. The computer program product includes computer code or a computer program. When the computer code or the computer program is run on a computer, the operations and/or processing performed by the sensing initiator in the method provided in this application are/is performed.

This application further provides a computer program product. The computer program product includes computer code or a computer program. When the computer code or the computer program is run on a computer, the operations and/or processing performed by the relay node in the method provided in this application are/is performed.

This application further provides a computer program product. The computer program product includes computer code or a computer program. When the computer code or the computer program is run on a computer, the operations and/or processing performed by the sensing responder in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling or direct coupling or communication connection may be implemented through some interfaces, indirect coupling or communication connections between the apparatuses or units, or electrical connections, mechanical connections, or connections in other forms.

The units described as separate parts may or may not be physically separate, and parts displayed as units may or may not be physical units, that is, may be located at one location, or may be distributed on a plurality of network units. Some or all of the units may be selected based on an actual requirement to implement technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing communication method, wherein the method is applied to a communication apparatus, and the method comprises:
receiving a sensing request, wherein a medium access control MAC payload of the sensing request comprises sensing initiator address information, and the sensing initiator address information indicates an address of a sensing initiator;
determining whether an address of the communication apparatus matches the address of the sensing initiator; and
when the address of the communication apparatus does not match the address of the sensing initiator, forwarding the sensing request based on the address of the sensing initiator; or when the address of the communication apparatus matches the address of the sensing initiator, parsing the sensing request.

2. The method according to claim 1, wherein a MAC header of the sensing request does not carry a destination address field, or the MAC header of the sensing request carries the destination address field and an address indicated by the destination address field is a broadcast address.

3. The method according to claim 1 or 2, wherein the sensing request further comprises at least one of the following information:
information indicating whether the sensing initiator uses mono-static sensing;
information about a number of sensing responders recommended in the sensing request; or
information about an address of a sensing responder recommended in the sensing request.

4. The method according to any one of claims 1 to 3, wherein the sensing request further comprises any one of the following information: information indicating that a sensing response is to be transmitted via ultra wideband UWB, and information indicating that the sensing response is to be transmitted via out of band OOB.

5. The method according to any one of claims 1 to 4, wherein the sensing request further comprises any one of the following information: information indicating that the sensing response and the sensing request are to be transmitted in a same beacon interval, and information indicating that the sensing response is to be transmitted in a beacon interval after a beacon interval in which the sensing request is located.

6. The method according to any one of claims 1 to 5, wherein the sensing request further comprises address type information, the address type information indicates a type of the address of the sensing initiator or a type of the address of the sensing responder recommended in the sensing request, and the type comprises a short address or an extended address.

7. The method according to any one of claims 1 to 6, wherein the method further comprises:
when the address of the communication apparatus does not match the address of the sensing initiator, after forwarding the sensing request, receiving an acknowledgment ACK frame or a data frame for the sensing request from the sensing initiator; or
when the address of the communication apparatus matches the address of the sensing initiator, sending an acknowledgment ACK frame or a data frame for the sensing request.

8. The method according to claim 7, wherein the ACK frame or the data frame is used to acknowledge the sensing request and acknowledge the sensing responder recommended in the sensing request; the ACK frame or the data frame is used to acknowledge the sensing request and reject the sensing responder recommended in the sensing request; or the ACK frame or the data frame is used to reject the sensing request.

9. The method according to any one of claims 1 to 8, wherein when the address of the communication apparatus matches the address of the sensing initiator, the method further comprises:
sending control information, wherein the control information comprises sensing control information, the sensing control information comprises a sensing packet bitmap, and each bit in the sensing packet bitmap indicates a frame structure of a corresponding sensing packet, or each bit in the sensing packet bitmap indicates a frame structure of a sensing packet in a corresponding sensing slot.

10. The method according to claim 9, wherein the sensing control information further comprises sensing packet configuration information, and when a value of the sensing packet configuration information is a first value, it indicates that the frame structure of the sensing packet is a first frame structure or a second frame structure, or when the value of the sensing packet configuration information is a second value, it indicates that the frame structure of the sensing packet is the first frame structure or a third frame structure.

11. The method according to claim 10, wherein
when the value of the sensing packet configuration information is the first value and a value of a bit in the sensing packet bitmap is 1, it indicates that the frame structure of the sensing packet is the first frame structure; or
when the value of the sensing packet configuration information is the first value and the value of the bit in the sensing packet bitmap is 0, it indicates that the frame structure of the sensing packet is the second frame structure.

12. The method according to claim 10, wherein
when the value of the sensing packet configuration information is the second value and a value of a bit in the sensing packet bitmap is 1, it indicates that the frame structure of the sensing packet is the first frame structure; or
when the value of the sensing packet configuration information is the second value and the value of the bit in the sensing packet bitmap is 0, it indicates that the frame structure of the sensing packet is the third frame structure.

13. The method according to any one of claims 9 to 12, wherein the control information further comprises sensing control present information, and the sensing control present information indicates that the sensing control information exists in the control information.

14. The method according to any one of claims 9 to 13, wherein the sensing control information further comprises information indicating a length of the sensing packet bitmap.

15. The method according to any one of claims 9 to 14, wherein the sensing control information further comprises at least one of the following:
information indicating a sequence number of a sensing sequence;
information indicating a spreading factor of the sensing sequence; and
information indicating a number of repetitions of a sensing symbol, wherein the sensing symbol is obtained based on the sensing sequence.

16. A sensing communication method, wherein the method is applied to a sensing requester, and the method comprises:
determining a sensing request; and
sending the sensing request, wherein a medium access control MAC payload of the sensing request comprises sensing initiator address information, and the sensing initiator address information indicates an address of a sensing initiator.

17. The method according to claim 16, wherein a MAC header of the sensing request does not carry a destination address field, or the MAC header carries the destination address field and an address indicated by the destination address field is a broadcast address.

18. The method according to claim 16 or 17, wherein the sensing request further comprises at least one of the following information:
information indicating whether the sensing initiator uses mono-static sensing;
information about a number of sensing responders recommended in the sensing request; and
information about an address of a sensing responder recommended in the sensing request.

19. The method according to any one of claims 16 to 18, wherein the sensing request further comprises any one of the following information: information indicating that a sensing response is to be transmitted via ultra wideband UWB, and information indicating that the sensing response is to be transmitted via out of band OOB.

20. The method according to any one of claims 16 to 19, wherein the sensing request further comprises any one of the following information: information indicating that the sensing response and the sensing request are to be transmitted in a same beacon interval, and information indicating that the sensing response is to be transmitted in a beacon interval after a beacon interval in which the sensing request is located.

21. The method according to any one of claims 16 to 20, wherein the sensing request further comprises address type information, the address type information indicates a type of the address of the sensing initiator or a type of the address of the sensing responder recommended in the sensing request, and the type comprises a short address or an extended address.

22. The method according to any one of claims 16 to 21, wherein the method further comprises:
receiving an acknowledgment ACK frame or a data frame for the sensing request, wherein the ACK frame or the data frame is used to acknowledge the sensing request and acknowledge the sensing responder recommended in the sensing request; the ACK frame or the data frame is used to acknowledge the sensing request and reject the sensing responder recommended in the sensing request; or the ACK frame or the data frame is used to reject the sensing request.

23. A sensing communication method, wherein the method is applied to a sensing initiator, and the method comprises:
determining control information; and
sending the control information, wherein the control information comprises sensing control information, the sensing control information comprises a sensing packet bitmap, and each bit in the sensing packet bitmap indicates a frame structure of a corresponding sensing packet, or each bit in the sensing packet bitmap indicates a frame structure of a sensing packet in a corresponding sensing slot.

24. A sensing communication method, wherein the method is applied to a sensing responder, and the method comprises:
receiving control information; and
parsing the control information, wherein the control information comprises sensing control information, the sensing control information comprises a sensing packet bitmap, and each bit in the sensing packet bitmap indicates a frame structure of a corresponding sensing packet, or each bit in the sensing packet bitmap indicates a frame structure of a sensing packet in a corresponding sensing slot.

25. The method according to claim 23 or 24, wherein the sensing control information further comprises sensing packet configuration information, and when a value of the sensing packet configuration information is a first value, it indicates that the frame structure of the sensing packet is a first frame structure or a second frame structure, or when the value of the sensing packet configuration information is a second value, it indicates that the frame structure of the sensing packet is the first frame structure or a third frame structure.

26. The method according to claim 25, wherein
when the value of the sensing packet configuration information is the first value and a value of a bit in the sensing packet bitmap is 1, it indicates that the frame structure of the sensing packet is the first frame structure; or
when the value of the sensing packet configuration information is the first value and the value of the bit in the sensing packet bitmap is 0, it indicates that the frame structure of the sensing packet is the second frame structure.

27. The method according to claim 25, wherein
when the value of the sensing packet configuration information is the second value and a value of a bit in the sensing packet bitmap is 1, it indicates that the frame structure of the sensing packet is the first frame structure; or
when the value of the sensing packet configuration information is the second value and the value of the bit in the sensing packet bitmap is 0, it indicates that the frame structure of the sensing packet is the third frame structure.

28. The method according to any one of claims 24 to 27, wherein the control information further comprises sensing control present information, and the sensing control present information indicates that the sensing control information exists in the control information.

29. The method according to any one of claims 24 to 28, wherein the sensing control information further comprises information indicating a length of the sensing packet bitmap.

30. The method according to any one of claims 24 to 29, wherein the sensing control information further comprises at least one of the following:
information indicating a sequence number of a sensing sequence;
information indicating a spreading factor of the sensing sequence; and
information indicating a number of repetitions of a sensing symbol, wherein the sensing symbol is obtained based on the sensing sequence.

31. A communication apparatus, comprising a unit configured to perform the method according to any one of claims 1 to 15, or comprising a unit configured to perform the method according to any one of claims 16 to 22, or comprising a unit configured to perform the method according to any one of claims 23 and 25 to 30, or comprising a unit configured to perform the method according to any one of claims 24 to 30.

32. A communication apparatus, comprising a processor and a memory, wherein
the memory is configured to store instructions; and
the processor is configured to execute the instructions, so that the method according to any one of claims 1 to 15 is performed, or the method according to any one of claims 16 to 22 is performed, or the method according to any one of claims 23 and 25 to 30 is performed, or the method according to any one of claims 24 to 30 is performed.

33. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 15 is performed, or the method according to any one of claims 16 to 22 is performed, or the method according to any one of claims 23 and 25 to 30 is performed, or the method according to any one of claims 24 to 30 is performed.

34. A computer-readable storage medium, wherein the computer-readable storage medium is configured to store a computer program, and when the computer program is executed, the method according to any one of claims 1 to 15 is performed, or the method according to any one of claims 16 to 22 is performed, or the method according to any one of claims 23 and 25 to 30 is performed, or the method according to any one of claims 24 to 30 is performed.

35. A computer program, wherein when the computer program is executed, the method according to any one of claims 1 to 15 is performed, or the method according to any one of claims 16 to 22 is performed, or the method according to any one of claims 23 and 25 to 30 is performed, or the method according to any one of claims 24 to 30 is performed.

36. A communication system, wherein the communication system comprises a sensing initiator and a sensing requester, the sensing initiator is configured to perform the method according to any one of claims 1 to 15, and the sensing requester is configured to perform the method according to any one of claims 16 to 22.

37. A communication system, wherein the communication system comprises a relay node and a sensing requester, the relay node is configured to perform the method according to any one of claims 1 to 15, and the sensing requester is configured to perform the method according to any one of claims 16 to 22.

38. A communication system, wherein the communication system comprises a sensing initiator and a sensing responder, the sensing initiator is configured to perform the method according to any one of claims 23 and 25 to 30, and the sensing responder is configured to perform the method according to any one of claims 24 to 30.
